# EUROPÄISCHE PATENTSCHRIFT

(11) **EP 3 841 053 B1**
(45) Veröffentlichungstag und Bekanntmachung des Hinweises auf die Patenterteilung: **22.02.2023**
(21) Anmeldenummer: 19753396.1
(22) Anmeldetag: 20.08.2019
(51) Int. Cl.: B66B 21/00

(54) **MODERNISIERUNGSVERFAHREN EINER BESTEHENDEN PERSONENTRANSPORTANLAGE**
METHOD FOR MODERNISING AN EXISTING PERSON TRANSPORT INSTALLATION
PROCÉDÉ DE MODERNISATION D'UNE INSTALLATION DE TRANSPORT DES PERSONNES EXISTANTE

(30) Priorität: 24.08.2018 EP 18190616
(43) Veröffentlichungstag der Anmeldung: 30.06.2021
(73) Patentinhaber: INVENTIO AG, 6052 Hergiswil (CH)
(72) Erfinder: ZIMMERMANN, Gilbert, 6362 Stansstad (CH); NOVACEK, Thomas, 2320 Schwechat (AT)
(74) Vertreter: Inventio AG
(86) Internationale Anmeldenummer: PCT/EP2019/072215
(87) Internationale Veröffentlichungsnummer: WO 2020/038915

(56) Entgegenhaltungen:
- WO-A1-2013/182232
- WO-A1-2017/220650
- US-A1- 2015 154 324
- US-B1- 6 912 489

## Beschreibung

Die vorliegende Erfindung betrifft ein Modernisierungsverfahren einer bestehenden Personentransportanlage, die als Fahrtreppe oder Fahrsteig ausgestaltet ist und die ein umlaufendes Transportband aufweist.

Personentransportanlagen in Form von Fahrtreppen oder Fahrsteigen werden meist innerhalb von Bauwerken dazu eingesetzt, um Personen zwischen zwei festgelegten Orten befördern zu können. Bei Fahrtreppen, welche teilweise auch als Rolltreppen bezeichnet werden, befinden sich die beiden Orte dabei auf unterschiedlichen Niveaus und Personen werden entlang eines stark geneigten Förderwegs befördert, wohingegen bei Fahrsteigen die beiden Orte auf einem gleichen Niveau oder lediglich geringfügig unterschiedlichen Niveaus liegen und die Personen ebenerdig beziehungsweise entlang eines lediglich geringfügig geneigten Förderwegs befördert werden. Nachfolgend werden Fahrtreppen und Fahrsteige unter dem allgemeineren Begriff Personentransportanlagen zusammengefasst.

Die Personentransportanlage verfügt im Allgemeinen über ein umlaufend angeordnetes Transportband mit mehreren entlang eines umlaufenden Verfahrwegs verlagerbaren Tritteinheiten. Die Tritteinheiten sind dabei zumindest innerhalb eines sogenannten Förderbereichs von außen her zugänglich, sodass Passagiere beispielsweise von einem Eintrittsbereich her kommend auf eine der Tritteinheiten in dem Förderbereich steigen können, dann entlang des Förderwegs befördert werden und letztendlich an einem gegenüberliegenden Austrittsbereich wieder aussteigen können. Der Förderbereich wird teilweise auch als Vorlauf-Bereich der Personentransportanlage bezeichnet, wobei das umlaufende Transportband in einem Rücklauf-Bereich unterhalb des Vorlauf-Bereichs zurückläuft und dabei natürlich nicht von Passagieren betreten werden kann. Bei Fahrtreppen werden die Tritteinheiten meist als Trittstufen bezeichnet, bei Fahrsteigen werden die Tritteinheiten in der Regel als Paletten bezeichnet. Die Tritteinheiten sind im Allgemeinen entlang des Verfahrwegs hintereinander angeordnet und jeweils mindestens an einer Förderkette beziehungsweise einem Band befestigt, um auf diese Weise das Transportband zu bilden. Standardmäßig weist die Personentransportanlag auch Balustraden mit umlaufenden Handläufen auf, die das Transportband längsseitig säumen. An diesen können sich die Benutzer festhalten.

Zusätzlich zum Transportband verfügt die Personentransportanlage über ein Tragwerk, mithilfe dessen die Personentransportanlage innerhalb des Bauwerks befestigt werden kann und über das das Gewicht der Personentransportanlage an das Bauwerk abgestützt wird. Das Tragwerk ist dabei meist als Fachwerk ausgebildet. Ein solches Fachwerk ist aus einer Vielzahl von Strukturkomponenten zusammengesetzt. Solche Strukturkomponenten können unter anderem Querstreben, Längsstreben, Diagonalstreben, Adapterbauteile und dergleichen mehr sein. Das Tragwerk ist dabei derart ausgelegt und angeordnet, dass es einerseits an tragende Strukturen des Bauwerks montiert werden kann und andererseits weitere Komponenten der Personentransportanlage, insbesondere Führungskomponenten des Transportbandes, das Transportband, die Balustraden, die Handläufe, Antriebskomponenten zum Antreiben des Transportbandes und der Handläufe, sowie Steuerungskomponenten zur Steuerung der Antriebskomponenten und dergleichen mehr in und an das Tragwerk montiert werden können. Eine geometrische und strukturelle Ausbildung der durch das Tragwerk gebildeten tragenden Struktur der Personentransportanlage sollte somit sowohl geometrischen und strukturellen Randbedingungen innerhalb des aufnehmenden Bauwerks als auch entsprechenden Gegebenheiten anderer Komponenten der Personentransportanlage Rechnung tragen.

Nach einer gewissen Betriebsdauer kann es erforderlich sein, eine Personentransportanlage zu modernisieren. Hierbei können beispielsweise verschlissene Komponenten der Personentransportanlage ersetzt werden. Alternativ oder ergänzend können Komponenten der Personentransportanlage durch entsprechende modernere Komponenten ersetzt werden, um beispielsweise eine Leistungsfähigkeit, einen Komfort und/oder eine Langlebigkeit der ursprünglichen Personentransportanlage zu verbessern.

Alternativ zu einer Modernisierung einer bestehenden Personentransportanlage könnte die Personentransportanlage auch als Ganzes ersetzt werden. Dabei kann es zwar kostengünstiger sein, eine Ersatz-Personentransportanlage standardisiert in einem Werk zu fertigen anstatt eine bestehende Personentransportanlage zu modernisieren. Allerdings können zusätzlicher Aufwand und Kosten entstehen, um die Ersatz-Personentransportanlage zu ihrem Einsatzort zu transportieren. Insbesondere kann es erheblichen Aufwand mit sich bringen, eine Ersatz-Personentransportanlage als sehr großes Bauteil in ein existierendes Gebäude einzubringen, da dabei oft Wände des Gebäudes und/oder andere Hindernisse zumindest teilweise entfernt werden müssen.

Im Rahmen einer Modernisierung einer Personentransportanlage wird typischerweise ein bestehendes Tragwerk der Personentransportanlage zunächst ausgeräumt, das heißt, insbesondere Komponenten der Personentransportanlage, welche modernisiert werden sollen, werden entfernt. Mit anderen Worten werden einige oder alle Komponenten der Personentransportanlage außer das Tragwerk, entfernt. Anschließend wird das verbleibende Tragwerk der Personentransportanlage zur Aufnahme neuer Komponenten vorbereitet, das heißt, insbesondere gereinigt und mit geeigneten Adapterplatten oder Adaptermodulen versehen, um dann anschließend neue Komponenten am Tragwerk montieren zu können.

Die WO 2004/035452 A1 beschreibt ein Verfahren zur Modernisierung einer bestehenden Fahrtreppe. Die WO 2017/220650 A1 beschreibt ebenfalls ein Verfahren zur Modernisierung einer bestehenden Fahrtreppe oder eines bestehenden Fahrsteiges.

Herkömmlich wird beim Modernisieren einer bestehenden Personentransportanlage nach dem Entfernen zu ersetzender Komponenten zunächst das verbleibende Tragwerk präzise vermessen, damit dieses später beispielsweise mithilfe von Adapterplatten und Adaptermodulen an aufzunehmende Ersatzkomponenten angepasst werden kann. Ein solches Vermessen wird dabei herkömmlich von spezialisiertem Personal durchgeführt, welches beispielsweise sowohl die Ersatzkomponenten und deren Einbauanforderungen genau kennt, als auch weiß, welche Maße des verbleibenden beziehungsweise bestehenden Tragwerks vermessen werden müssen, um ein späteres Einpassen der Ersatzkomponenten sowie ein eventuelles Konstruieren oder Anpassen von Adapterbauteilen mit ausreichender Genauigkeit vorbereiten zu können. Ein solches Vermessen des Tragwerkes und anschließendes Konstruieren von Adapterbauteilen war aufgrund der benötigten Expertise des Fachpersonals sowie der Notwendigkeit, dass das Fachpersonal die Personentransportanlage vor Ort inspiziert und vermisst, sowohl teuer als auch zeitintensiv.

Es kann unter anderem ein Bedarf an einem Modernisierungsverfahren bestehen, welches die Modernisierung einer Fahrtreppe oder eines Fahrsteigs wesentlich vereinfacht und einen geringeren personellen und/oder finanziellem Aufwand erfordert. Besonders kann ein Bedarf an einem Modernisierungsverfahren bestehen, mittels dem die Strukturkomponenten des Tragwerkes der bestehenden Personentransportanlage vermessen werden können, ohne dass hierzu qualifiziertes Fachpersonal vor Ort die Personentransportanlage vermessen muss.

Einem solchen Bedarf kann durch das Modernisierungsverfahren gemäß dem unabhängigen Anspruch entsprochen werden. Vorteilhafte Ausführungsformen sind in den abhängigen Ansprüchen sowie der nachfolgenden Beschreibung definiert.

Gemäß einem ersten Aspekt der Erfindung wird ein Modernisierungsverfahren einer bestehenden Personentransportanlage vorgeschlagen, die als Fahrtreppe oder Fahrsteig ausgestaltet ist und daher ein umlaufend angeordnetes Transportband umfasst. Das erfindungsgemäße Modernisierungsverfahren weist zumindest die nachfolgend aufgeführten Verfahrensschritte auf, wobei diese nicht zwingend in der aufgeführten Reihenfolge abgearbeitet werden müssen.

In einem der Verfahrensschritte wird vom bestehenden Tragwerk der bestehenden Personentransportanlage ein Dreidimensionaler-Tragwerkmodell-Datensatz erzeugt. Grundsätzlich umfasst im Sinne der vorliegenden Erfindung ein Modell-Datensatz eines Bauteils charakterisierende Merkmale, die möglichst alle Ausprägungen des beschriebenen Bauteils wiedergeben. Charakterisierende Merkmale können die geometrischen Daten (Länge, Breite, Höhe, Querschnittsform, Ausnehmungen, Vorsprünge, Radien, Bogenmaße, etc.), die Oberflächenbeschaffenheit (Rauheit, Textur, Farbe, etc.), die Werkstoffeigenschaften (chemische Zusammensetzung, Dichte, Elastizitätsmodul, Biegewechselfestigkeit, Zug- und Druckfestigkeit, etc.) und dergleichen mehr sein. Das bedeutet, dass für den Dreidimensionaler-Tragwerkmodell-Datensatz des bestehenden Tragwerkes möglichst viele geometrische Daten in digitalisierter Form erfasst, und als charakterisierende Merkmale abgespeichert werden müssen. Zudem werden vorzugsweise noch weitere Daten zur Materialbeschaffenheit des bestehenden Tragwerkes ermittelt und als charakterisierende Merkmale in dessen Dreidimensionaler-Tragwerkmodell-Datensatz hinterlegt. Gegebenenfalls ist ein Dreidimensionaler-Tragwerkmodell-Datensatz des bestehenden Tragwerkes bereits verfügbar oder zumindest teilweise verfügbar, so dass sich die eigentliche Erzeugung auf eine Ergänzung mit weiteren Daten oder eine Konvertierung in ein verwendbares Datenformat beschränkt. In den meisten Fällen existiert jedoch kein solcher Dreidimensionaler-Tragwerkmodell-Datensatz, da das bestehende Tragwerk bereits vor Jahrzehnten anhand konventioneller, zweidimensionaler Zeichnungen hergestellt wurde. Die Erfassung der geometrischen Daten eines solchen Tragwerkes wird weiter unten ausführlicher beschrieben.

In einem weiteren Verfahrensschritt wird ausgehend vom Dreidimensionaler-Tragwerkmodell-Datensatz des bestehenden Tragwerkes dessen Kernraum ermittelt. Tragwerke von Fahrtreppen und Fahrsteigen aller Hersteller können zwar sehr unterschiedlich ausgestaltet sein. Sie haben aber alle bezogen auf ihre Längserstreckung eine U-förmigen Querschnitt, indem jeweils zwei Seitenstrukturen durch einen Boden oder eine Bodenstruktur miteinander verbunden sind. Mit anderen Worten ausgedrückt, weist das bestehende Tragwerk beziehungsweise dessen Dreidimensionaler-Tragwerkmodell-Datensatz zwei Seitenstrukturen auf, die mittels einer Bodenstruktur miteinander verbunden sind. Der vorangehend erwähnte Kernraum wird definitionsgemäß durch die Innenseiten der Seitenstrukturen und der Bodenstruktur begrenzt und ist üblicherweise aufgrund der Einbaulage des Tragwerkes, gegen oben offen.

Ferner werden in einem weiteren Verfahrensschritt kundenspezifische Konfigurierungsdaten betreffend die neu zu verbauenden Bauteile ermittelt. Hierbei kann der Kunde aus verschiedenen Optionen die gewünschten Optionen auswählen. Solche Optionen können insbesondere das Erscheinungsbild betreffen, selbstverständlich können aber auch gewünschte Leistungsdaten der Personentransportanlage oder zusätzliche Sicherheitsausrüstungen wie Sensoren und dergleichen mehr, ausgewählt werden. Vorzugsweise werden nur Konfigurierungen ermöglicht, deren Transportband innerhalb des Kernraums angeordnet werden kann. Nebst den einbauspezifischen Größen wie dem Abstand der beiden Zutrittsbereiche und der Förderhöhe der bestehenden Fahrtreppe oder des bestehenden Fahrsteiges, sind insbesondere die Breite des Kernraums des bestehenden Tragwerkes beziehungsweise des zum Einbau vorgesehenen, neuen Transportbandes die begrenzenden charakterisierenden Merkmale.

In einem weiteren Verfahrensschritt wird mittels der kundenspezifischen Konfigurierungsdaten aus Bauteilmodell-Datensätzen ein Digitaler-Doppelgänger-Datensatz einer kompletten Personentransportanlage erstellt. Das bedeutet, dass von jedem einzelnen Bauteil einer Fahrtreppe oder eines Fahrsteiges ein Bauteilmodell-Datensatz aus einem Speichermedium abrufbar ist, der das Bauteil in einer Soll-Konfiguration mittels charakterisierender Merkmale definiert. Nebst den bereits weiter oben erwähnten, charakterisierenden Merkmalen weisen die Bauteilmodell-Datensätze auch Schnittstellenmerkmale zu angrenzenden Bauteilmodell-Datensätzen auf. Die Schnittstellenmerkmale sind zum einen Raumkoordinaten im dreidimensionalen Raum, an denen weiterer Bauteile anhand ihrer Schnittstellenmerkmale positioniert werden. Zum anderen können die Schnittstellenmerkmale auch Verknüpfungsinformationen aufweisen, die definieren, welcher Bauteilmodell-Datensatz oder welche Auswahl an anderen Bauteilmodell-Datensätzen überhaupt zulässig sind, an dieser Schnittstelle anzuknüpfen. Ferner geben die Schnittstellenmerkmale vorzugsweise die geometrische Ausgestaltung dieser Schnittstelle wieder, beispielsweise den Durchmesser, die Tiefe sowie die räumliche Ausrichtung eines Schraubenlochs.

Mit anderen Worten existiert von jeder zu verwendenden Schraube, Führungsschiene, jedem Trittelement, etc. ein virtuelles, dreidimensionales Modell. Die aus den kundenspezifischen Konfigurierungsdaten definierte Gesamtheit dieser virtuellen, dreidimensionalen Modelle ergibt, anhand der Schnittstellenmerkmale zusammengesetzt, ein dreidimensionales, virtuelles Modell einer kompletten Personentransportanlage und damit der vorangehend erwähnte Digitaler-Doppelgänger-Datensatz. Die Daten des Digitaler-Doppelgänger-Datensatzes können beispielsweise als CAD-Datensatz vorliegen, welcher unter anderem als charakterisierende Eigenschaften geometrische Abmessungen und/oder andere charakterisierende Eigenschaften der die Personentransportanlage bildenden Bauteile wiedergibt.

Der zentrale Bauteilmodell-Datensatz dieses Digitaler-Doppelgänger-Datensatzes ist der alleine aufgrund der kundenspezifischen Konfigurierungsdaten ausgelegte Bauteilmodell-Datensatz des Tragwerkes, der eigentlich gar nicht gebraucht wird. Er weist aber die meisten Schnittstellenmerkmale zu angrenzenden Bauteilmodell-Datensätzen sowie die räumlichen Abstände dieser Schnittstellenmerkmale zueinander auf. Wie weiter unten erklärt, wird dieser Bauteilmodell-Datensatz zum Abgleich des Dreidimensionaler-Tragwerkmodell-Datensatzes des bestehenden Tragwerkes benötigt und wird deshalb nachfolgend als provisorischer Tragwerkmodell-Datensatz bezeichnet.

Wie bereits erwähnt, werden die zwecks Modernisierung einzufügenden, neuen Bauteile respektive deren Bauteilmodell-Datensätze anhand der kundenspezifischen Konfigurierungsdaten und insbesondere des ermittelten Kernraumes ausgewählt und ausgelegt. Hierbei bleiben aber etwaige Konturen von Bauteilen des bestehenden Tragwerkes unberücksichtigt, die in den Kernraum hineinragen oder diesen durchdringen. Damit diese Konturen den Einbau und die Funktion der neu einzufügenden Bauteile nicht behindern, werden in einem weiteren Verfahrensschritt in den Kernraum hineinragende oder diesen durchdringende Konturen des Dreidimensionaler-Tragwerkmodell-Datensatz des bestehenden Tragwerkes als zu entfernen markiert. Deren physische Pendants werden später bei der Aufbereitung des bestehenden Tragwerkes entfernt. Beispiele solcher Konturen sind Querstreben, welche die beiden Seitenstrukturen des Tragwerkes gegeneinander abstützen oder an den Seitenstrukturen angeordnete Spanten, die der Abstützung und Befestigung von Führungsschienen dienen.

In einem weiteren Verfahrensschritt wird nun der Dreidimensionaler-Tragwerkmodell-Datensatz des bestehenden Tragwerkes mit dem provisorischen Tragwerkmodell-Datensatz des Digitaler-Doppelgänger-Datensatzes abgeglichen. Hierbei können die Schnittstellenmerkmale des provisorischen Tragwerkmodell-Datensatzes auf den Dreidimensionaler-Tragwerkmodell-Datensatz des bestehenden Tragwerks kopiert werden. Dabei werden beispielsweise die Schnittstellenmerkmale des provisorischen Tragwerkmodell-Datensatzes, welche man sich als Positionspunkte im Raum vorstellen kann, über die räumlichen Lagen der Mittellängsachsen der beiden Bauteilmodell-Datensätze und der in der Einbaulage horizontalen Ebenen der Zutrittsbereiche ausgerichtet, auf den Dreidimensionaler-Tragwerkmodell-Datensatz des bestehenden Tragwerks übertragen. Anschließend können Bauteilmodell-Datensätze von Adapterbauteilen unter Berücksichtigung der Schnittstellenmerkmale des provisorischen Tragwerkmodell-Datensatzes des Digitaler-Doppelgänger-Datensatzes, den geometrischen Daten des Dreidimensionaler-Tragwerkmodell-Datensatzes des bestehenden Tragwerkes und unter Nichtbeachtung von dessen markierten Konturen erzeugt werden.

Es stehen verschiedene Möglichkeiten zur Auswahl, vom bestehenden Tragwerk ein Dreidimensionaler-Tragwerkmodell-Datensatz zu erzeugen. Die aufwändigste ist ein händisches Ausmessen des bestehenden Tragwerkes nachdem alle anderen bestehenden Teile der Personentransportanlage entfernt wurden. Die ausgemessenen Messdaten können anschließend beispielsweise in ein 3D-CAD System übertragen werden. Hierbei besteht aber die Gefahr, dass sich Messfehler und/oder Übertragungsfehler einschleichen können. Wesentlich sicherer, präziser und auch schneller ist der Einsatz von Laserscannern oder TOF-Kameras, die ein dreidimensionales, virtuelles Abbild des bestehenden Tragwerks erfassen können. Hierbei müssen aber aus mehreren Positionen rund um das Tagwerk Aufnahmen gemacht, und diese zusammengesetzt werden, wobei aufnahmebedingte Verzerrungen korrigiert werden müssen. Nach der Aufbereitung und dem Zusammensetzen der Aufnahmen, kann das daraus entstandene dreidimensionale Abbild in ein Computersystem eingelesen und mit bekannten Softwarealgorithmen (z.B. Tracing) in einen dreidimensionalen Bauteilmodell-Datensatz des bestehenden Tragwerkes konvertiert werden. Die beiden Methoden haben den Nachteil, dass das bestehende Tragwerk freigelegt werden muss und daher ab diesem Zeitpunkt die bestehende Personentransportanlage nicht mehr verfügbar ist.

Dieser Nachteil kann überwunden werden, wenn der Dreidimensionaler-Tragwerkmodell-Datensatz des bestehenden Tragwerkes dadurch erzeugt wird:
- dass eine Bildaufnahmeeinrichtung am bestehenden, umlaufenden Transportband fixiert wird;
- dass zumindest eine Tritteinheit des umlaufenden Transportbandes entfernt wird, um einen visuellen Zugang zu darunterliegenden Bereichen des bestehenden Tragwerkes zu eröffnen;
- dass vor dem Aufnehmen von Bildaufnahmen, ortsfest an der bestehenden Personentransportanlage, an mindestens einer Stelle innerhalb des Verfahrwegs der Tritteinheiten mindestens eine Referenzmarke angebracht wird die für die Bildaufnahmeeinrichtung eindeutig erkennbar ist;
- dass das Transportband zusammen mit der daran fixierten Bildaufnahmeeinrichtung zumindest über Teilbereiche des Verfahrwegs umlaufend verlagert wird;
- dass Bildaufnahmen der zu vermessenden Strukturkomponenten mittels der Bildaufnahmeeinrichtung von mehreren Positionen entlang des Verfahrwegs aus aufgenommen werden; und
- dass das Erzeugen des Dreidimensionaler-Tragwerkmodell-Datensatzes zumindest von Teilbereichen der Strukturkomponenten des bestehenden Tragwerkes, basierend auf den aufgenommenen Bildaufnahmen und unter Zuhilfenahme der mindestens einen, mitaufgenommenen Referenzmarke, erfolgt.

Nachdem die erforderlichen Bildaufnahmen gemacht und entsprechend verarbeitet worden sind, kann die Tritteinheit wieder in das bestehende Transportband eingesetzt, und die bestehende Personentransportanlage bis unmittelbar zur Durchführung der Modernisierung weiterbetrieben werden.

Wie bereits erwähnt, wird vor dem Aufnehmen der Bildaufnahmen eine für die Bildaufnahmeeinrichtung eindeutig erkennbare Referenzmarke ortsfest an der Personentransportanlage an einer Stelle innerhalb des Verfahrwegs angebracht oder mehrere für die Bildaufnahmeeinrichtung eindeutig erkennbare Referenzmarken werden ortsfest an der Personentransportanlage an verschiedenen Stellen entlang des Verfahrwegs angebracht.

Mit anderen Worten kann die bestehende Personentransportanlage, bevor mit dem Aufnehmen der Bildaufnahmen von deren Tragwerk begonnen wird, durch Anbringen einer oder mehrerer Referenzmarken geeignet vorbereitet werden, um beispielsweise nachfolgend aus den aufgenommenen Bildaufnahmen den Dreidimensionaler-Tragwerkmodell-Datensatz einfacher und/oder präziser erzeugen zu können und/oder um diesen besser auswerten zu können. Beim Erzeugen des Dreidimensionaler-Tragwerkmodell-Datensatzes können die Referenzmarken dann beispielsweise als Orientierung, zur Bildung eines Maßstabs, oder ähnlichem genutzt werden.

Als Referenzmarken können beispielsweise selbstklebende oder einfach zu befestigende Marker verwendet werden. Die Referenzmarken können mit Mustern, Barcodes oder Ähnlichem versehen sein. Die Muster beziehungsweise Barcodes können bei den verschiedenen Referenzmarken unterschiedlich ausgebildet sein, sodass diese voneinander unterscheidbar sind. Die Referenzmarken können auch als Zentriermarken, d.h. zum Beispiel ähnlich einer Zielscheibe, ausgebildet sein.

Die Referenzmarken können an vorbestimmten Positionen entlang der Personentransportanlage angebracht werden. Alternativ können Referenzmarken an beliebigen Positionen an der Personentransportanlage angebracht werden. Insbesondere können die Referenzmarken an Teilen der Balustrade und/oder der zu vermessenden und aufzunehmenden Strukturkomponenten des bestehenden Tragwerkes angebracht werden. Positionen der Referenzmarken relativ zueinander können gegebenenfalls präzise vermessen werden. Hierbei kann es nur auf die Positionen beziehungsweise Abstände der Referenzmarken relativ zueinander ankommen, eine Absolut-Positionierung der Referenzmarken an der Personentransportanlage kann von geringer oder keiner Relevanz sein.

Gemäß einer Ausführungsform der Erfindung können beim Erzeugen des Dreidimensionaler-Tragwerkmodell-Datensatzes mehrere Bildaufnahmen unter Berücksichtigung von in den Bildaufnahmen mitaufgenommenen Referenzmarken zu einer Gesamtaufnahme zusammengesetzt werden.

Mit anderen Worten können die zuvor an der Personentransportanlage angebrachten Referenzmarken dazu genutzt werden, um mehrere einzeln aufgenommene Bildaufnahmen anschließend zu einer Gesamtaufnahme zusammensetzen zu können, um aus dieser dann das 3D-Modell erzeugen zu können. Dieses 3D-Modell kann dann als Ausgangsbasis für den Dreidimensionaler-Tragwerkmodell-Datensatz abgespeichert werden. Ausgangsbasis deshalb, weil die aus den Bildaufnahmen extrahierten Abmessungen zwar bereits charakterisierende Eigenschaften des Dreidimensionaler-Tragwerkmodell-Datensatzes sind, diese aber wie nachfolgend erwähnt, gegebenenfalls noch aufbereitet werden müssen oder weitere charakterisierenden Eigenschaften wie Angaben zu den Materialeigenschaften hinzugefügt werden müssen, um zu einem ausreichen definierten, Dreidimensionaler-Tragwerkmodell-Datensatz zu gelangen.

Es kann vorteilhaft sein, die Referenzmarken derart an der Personentransportanlage entlang des Verfahrwegs anzuordnen und/oder Bildaufnahmen entlang des Verfahrwegs an geeigneten Positionen derart aufzunehmen, dass in jeder aufgenommenen Bildaufnahme zumindest eine, vorzugsweise wenigstens zwei Referenzmarken mit aufgenommen sind. Insbesondere, wenn die Referenzmarken jeweils unterschiedlich ausgebildet sind und somit voneinander unterscheidbar sind, kann aufgrund der in den Bildaufnahmen mitaufgenommenen Referenzmarken eindeutig ermittelt werden, an welcher Position eine Bildaufnahme aufgenommen wurde und wie diese mit anderen Bildaufnahmen zusammengesetzt werden kann.

Gemäß einer Ausführungsform der Erfindung können beim Erzeugen des Dreidimensionaler-Tragwerkmodell-Datensatzes Verzerrungen in den Bildaufnahmen anhand von in den Bildaufnahmen mitaufgenommenen Referenzmarken korrigiert werden.

Ähnlich wie bei der vorangehend beschriebenen Ausführungsform können die Referenzmarken somit wiederum dazu genutzt werden, um den Dreidimensionaler-Tragwerkmodell-Datensatz erzeugen zu können. Dabei kann durch Berücksichtigung der an vorbekannten Positionen und/oder in vorbekannten Abständen zueinander angebrachten Referenzmarken erkannt werden, ob es in den Bildaufnahmen zu Verzerrungen, beispielsweise verursacht durch optische Fehler der Bildaufnahmeeinrichtung, gekommen ist. Insbesondere kann es wichtig sein, aus den aufgenommenen Bildaufnahmen auf tatsächliche Abmessungen und Geometrien der aufgenommenen Strukturkomponenten des bestehenden Tragwerkes rückschließen zu können und dabei virtuelle Aufnahmefehler in Form von Verzerrungen von realen Geometrien der Strukturkomponenten unterscheiden zu können. Beispielsweise können sich die Strukturkomponenten des bestehenden Tragwerkes, welche anfänglich meist in Form gerader Streben oder Holme ausgebildet sind, im Laufe der Zeit verformen oder verbiegen. In den aufgenommenen Bildaufnahmen sind dann gekrümmte Strukturkomponenten zu erkennen. Allerdings können die Strukturkomponenten auch weiterhin gerade sein und lediglich aufgrund von optischen Verzerrungen in den Bildaufnahmen gekrümmt erscheinen. Mithilfe der zuvor angebrachten Referenzmarken können die virtuellen Verzerrungen von realen Krümmungen unterschieden werden. Solche Verzerrungen können dann geeignet herausgerechnet werden und damit die Genauigkeit beziehungsweise Maßstabstreue der charakterisierenden Eigenschaften des Dreidimensionaler-Tragwerkmodell-Datensatzes verbessert werden.

Als weitere mögliche Ausführungsform der Erfindung können die charakterisierenden Eigenschaften des Dreidimensionaler-Tragwerkmodell-Datensatzes anhand von in den Bildaufnahmen mitaufgenommenen Referenzmarken kalibriert werden.

Mit anderen Worten können die an vorbekannten beziehungsweise genau vermessenen Positionen angebrachten Referenzmarken dazu genutzt werden, um das erzeugte 3D-Modell des Dreidimensionaler-Tragwerkmodell-Datensatzes zu kalibrieren. In einem derart kalibrierten 3D-Modell sind insbesondere die Lage und die Abmessungen von Strukturkomponenten oder Abstände zwischen Strukturkomponenten maßstabsgetreu wiedergegeben, sodass mithilfe des Dreidimensionaler-Tragwerkmodell-Datensatzes solche Abmessungen oder Abstände genau vermessen werden können.

Gemäß einer Ausführungsform können die Bildaufnahmen während des kontinuierlichen Verlagerns des bestehenden Transportbandes aufgenommen werden.

Anders ausgedrückt kann das Transportband derart kontinuierlich umlaufend verlagert werden, dass mit diesem die an ihm fixierte Bildaufnahmeeinrichtung kontinuierlich beispielsweise von einer Extremalposition zu einer zweiten Extremalposition, d.h. beispielsweise von einem Zutrittsbereich bis zum anderen Zutrittsbereich der bestehenden Personentransportanlage, bewegt wird. Auf dem Verfahrweg zwischen den beiden Extremalpositionen kann die Bildaufnahmeeinrichtung dann mehrere Bildaufnahmen von verschiedenen Positionen aus aufnehmen. Das Transportband braucht hierzu nicht zwingend angehalten zu werden, sodass eine Verfahrdauer kurzgehalten werden kann und/oder eine Ansteuerung des Antriebes des Transportbandes einfach gehalten werden kann.

Alternativ kann gemäß einer Ausführungsform die Bewegung des Transportbandes während des Aufnehmens der Bildaufnahmen temporär unterbrochen werden.

Mit anderen Worten kann die Bildaufnahmeeinrichtung zwar wieder durch das Transportband von einer Extremalposition zu einer zweiten Extremalposition verlagert werden. Dabei wird der Verlagerungsvorgang jedoch ein oder mehrere Male kurzzeitig unterbrochen, das heißt, das Transportband wird kurzzeitig gestoppt, so dass die Bildaufnahmeeinrichtung die Bildaufnahmen während eines Stillstands aufnehmen kann. Eine Qualität der Bildaufnahmen kann hierdurch im Allgemeinen verbessert werden, da es beispielsweise nicht zu Unschärfen aufgrund von Ruckeln oder Wackeln der Bildaufnahmeeinrichtung kommt.

Gemäß einer Ausführungsform kann die Bildaufnahmeeinrichtung mit einer Steuerung der bestehenden Personentransportanlage Signale austauschen, um das Aufnehmen der Bildaufnahmen mit dem Verlagern des Transportbandes zu koordinieren.

Anders ausgedrückt können die Bildaufnahmeeinrichtung und die Steuerung der Personentransportanlage derart in Kommunikation stehen, dass die Bildaufnahmeeinrichtung beispielsweise in Abhängigkeit von einem aktuellen Verlagerungszustand des Transportbandes, koordiniert Bildaufnahmen aufnehmen kann. Beispielsweise kann die Bildaufnahmeeinrichtung aufgrund der von der Steuerung der Personentransportanlage erhaltenen Signale erkennen, wenn sie eine bestimmte Position erreicht hat, und kann von dieser Position aus dann eine Bildaufnahme aufnehmen. Alternativ oder ergänzend kann die Bildaufnahmeeinrichtung durch Signalübertragung die Steuerung der bestehenden Personentransportanlage dazu veranlassen, kurzzeitig stehenzubleiben, um eine Bildaufnahme aufnehmen zu können. Die Bildaufnahmeeinrichtung und die Steuerung der bestehenden Personentransportanlage können in unterschiedlicher Weise miteinander kommunizieren, zum Beispiel über eine zuvor einzurichtende Kabelverbindung oder alternativ beispielsweise über eine drahtlose Funkverbindung.

Gemäß einer Ausführungsform kann die Bildaufnahmeeinrichtung dazu eingerichtet sein, ein Ende des Förderbereichs zu erkennen und daraufhin der Steuerung der bestehenden Personentransportanlage zu signalisieren, das Verlagern des Transportbandes zu beenden.

Mit anderen Worten kann die Bildaufnahmeeinrichtung beispielsweise anhand der von ihr aufgenommenen Bildaufnahmen erkennen, wenn sie sich einem Ende des Förderbereichs nähert. Die in Kommunikation mit der Steuerung der Personentransportanlage stehende Bildaufnahmeeinrichtung kann daraufhin die Steuerung anweisen, das Transportband anzuhalten.

Der Bildaufnahmevorgang kann somit beispielsweise von einer Person gestartet werden, sobald die Bildaufnahmeeinrichtung korrekt am Transportband fixiert ist und gleichzeitig oder nachfolgend kann die Steuerung der bestehenden Personentransportanlage entsprechend getriggert werden, um die Bildaufnahmeeinrichtung entlang des Verfahrwegs zu fördern. Wenn die Bildaufnahmeeinrichtung beispielsweise ein gegenüberliegendes Ende des Verfahrwegs beziehungsweise des Förderbereichs erreicht oder sich diesem nähert, kann die Bildaufnahmeeinrichtung dies selbstständig an die Steuerung der Personentransportanlage mitteilen und diese instruieren, den Fördervorgang zu stoppen. Dann kann die Bildaufnahmeeinrichtung wieder vom Transportband demontiert werden. Das gesamte Verfahren kann hierdurch vereinfacht werden. Insbesondere können Beschädigungen der Bildaufnahmeeinrichtung durch Kollision mit Teilen der Personentransportanlage vermieden werden.

In einer weiteren Ausführung der Erfindung kann beim Digitaler-Doppelgänger-Datensatz der aus den kundenspezifischen Konfigurierungsdaten generierte provisorische Tragwerkmodell-Datensatz durch den Dreidimensionaler-Tragwerkmodell-Datensatz des bestehenden Tragwerkes ersetzt werden. Selbstverständlich werden beim Ersetzen alle räumlichen Positionen der verbleibenden Bauteilmodell-Datensätze des Digitaler-Doppelgänger-Datensatzes zueinander, beziehungsweise deren räumliche Anordnung zueinander, beibehalten. Ebenso können bestimmte räumliche Positionsinformationen des provisorischen Tragwerkmodell-Datensatzes, wie beispielsweise dessen Mittellängsachse und die horizontalen Ebenen von dessen Zutrittsbereichen, beibehalten werden, um an diesen den einzufügenden Dreidimensionaler-Tragwerkmodell-Datensatz des bestehenden Tragwerkes auszurichten. Ferner müssen die Schnittstellenmerkmale des provisorischen Tragwerkmodell-Datensatzes gewissermaßen auf den Dreidimensionaler-Tragwerkmodell-Datensatz des bestehenden Tragwerkes mittels Adapterteile übertragen werden.

Die Adapterbauteile erfüllen hierbei die Funktion, ein Bindeglied zwischen dem bestehenden Tragwerk und den in dieses Tragwerk neu einzufügenden Komponenten zu sein, wobei diese neu einzufügenden Komponenten als Bauteilmodell-Datensätze im Digitaler-Doppelgänger-Datensatz vereinigt, auf Basis der kundenspezifischen Konfigurierungsdaten ausgewählt wurden. Anders ausgedrückt bedeutet dies, dass alle Schnittstellenmerkmale des provisorischen Tragwerkmodell-Datensatzes durch Bauteilmodell-Datensätze von Adapterbauteile auch am Dreidimensionaler-Tragwerkmodell-Datensatz des bestehenden Tragwerkes, und hernach in physischer Form durch Adapterbauteile am bestehenden Tragwerk verfügbar gemacht werden müssen. Nach dem Entfernen des provisorischen Tragwerkmodell-Datensatzes können der Dreidimensionaler-Tragwerkmodell-Datensatz des bestehenden Tragwerkes, der um die markierten Konturen reduziert worden ist, sowie die Bauteilmodell-Datensätze der Adapterbauteile in den Digitaler Doppelgänger-Datensatz eingefügt werden.

Zur Generierung der Bauteilmodell-Datensätze von Adapterbauteilen kann ein Regelsatz (generatives funktionsgetriebenes Design) vorhanden sein, mittels welchen Regelsatzes für jeden Bauteilmodell-Datensatz eines Adapterbauteils eine logische Auswahl und Gruppierung von Schnittstellenmerkmalen der am Dreidimensionaler-Tragwerkmodell-Datensatz des bestehenden Tragwerkes anzufügenden Bauteilmodell-Datensätze des Digitaler-Doppelgänger Datensatzes getroffen werden kann. Die logische Auswahl kann sich beispielsweise auf Kriterien wie das Gewicht des herzustellenden Adapterbauteils, dessen Herstellung, dessen Handhabung und dergleichen mehr stützen.

Der Regelsatz kann ferner einen Algorithmus enthalten, der geometrische Daten von Konturen des Dreidimensionaler-Tragwerkmodell-Datensatzes des bestehenden Tragwerkes, die nahe den ausgewählten Schnittstellenmerkmalen des Adapterbauteils angeordnet sind, selektiert, und die auf die ausgewählten Schnittstellenmerkmale einwirkenden, maximalen Kräfte ermittelt. Hierbei wird vorzugsweise ein Maximalansatz gewählt, das heißt, dass die aus dem Digitaler-Doppelgänger-Datensatz als Schnittstellenmerkmale abrufbaren, bei den einzelnen Bauteilmodell-Datensätzen als charakterisierende Eigenschaften hinterlegten, maximal zu erwartenden Kräfte als Berechnungsgrundlage herangezogen werden.

Um zu einem funktionsgetriebenen Design des Adapterbauteils zu gelangen, kann in einer weiteren Ausführung mittels der selektierten, geometrischen Daten, den geometrischen Daten der Bauteilmodell-Datensätze, welche die ausgewählten Schnittstellenmerkmale aufweisen, sowie mit den auf diese Schnittstellenmerkmale wirkenden Kräften, der Bauteilmodell-Datensatz des Adapterbauteils generiert werden. Hierbei geben die selektierten, geometrischen Daten der miteinander zu verbindenden Bauteilmodell-Datensätze bestimmte Ausdehnungsgrenzen des Adapterbauteils vor. Die Generierung des Bauteilmodell-Datensatzes des Adapterbauteils erfolgt vorzugsweise unter Berücksichtigung von auszuwählenden Optimierungskriterien mittels eines Optimierungsalgorithmus. Dieser kann beispielsweise auf Basis der bekannten Monte-Carlo-Simulation erfolgen.

Mit anderen Worten können die Adapterbauteile dadurch individuell aufgrund ihrer Funktion, ihren Einbaubedingungen sowie auf diese einwirkenden Kräfte und Belastungen für die jeweilige, zu modernisierende Personentransportanlage Topologieoptimiert konfiguriert und in weiterer Folge auch produziert werden. Daraus ergeben sich beträchtliche Vorteile für den Ressourcenverbrauch, da nur die unbedingt notwendige Menge an Material verbraucht wird (z.B. Stahl, Aluminium) bzw. neuartige, ressourcensparende Produktionstechniken eingesetzt werden können, wodurch der CO²-Footprint der modernisierten Personentransportanlage noch weiter sinkt, da durch die Beibehaltung des bestehenden Tragwerkes und durch ressourcenschonende Anpassung mit Adapterbauteilen weniger Material aufwändig recycelt werden muss.

Da der Erfolg einer Modernisierung einer Personentransportanlage auch immer eine zeitkritische Komponente beinhaltet, kann mindestens ein Bauteilmodell-Datensatz eines Adapterbauteils mit entsprechenden produktionsspezifischen Daten versehen, an eine 3D-Druckmaschine übertragen und mittels dieses Bauteilmodell-Datensatzes ein physisches Adapterbauteil erzeugt werden. Hierdurch können diese sehr speziellen Einzelstücke ressourcenschonend produziert werden und sind gewissermaßen «über Nacht» verfügbar.

Wie bereits erwähnt, sind nicht nur geometrische Daten erforderlich, um mittels eines Bauteilmodell-Datensatzes ein entsprechendes, physisches Bauteil herzustellen. Das erfindungsgemäße Modernisierungsverfahren sieht deshalb vor, einen Kommissionierungs-Digitaler-Doppelgänger-Datensatz aus dem Digitaler-Doppelgänger-Datensatz zu erstellen, indem der Digitaler-Doppelgänger-Datensatz und dessen Bauteilmodell-Datensätze mit produktionsspezifischen Daten ergänzt wird und dieser Kommissionierungs-Digitaler-Doppelgänger-Datensatz Soll-Daten umfasst, welche charakterisierende Merkmale von Bauteilen der Personentransportanlage in einer Soll-Konfiguration wiedergeben.

Mit anderen Worten wird unter Berücksichtigung der kundenspezifischen Konfigurierungsdaten aus Bauteilmodell-Datensätzen sowie dem Dreidimensionaler-Tragwerkmodell-Datensatz des bestehenden Tragwerks und den generierten Bauteilmodell-Datensätzen der Adapterbauteile ein Digitaler-Doppelgänger-Datensatz erstellt und dann dieser Digitaler-Doppelgänger-Datensatz unter Berücksichtigung der produktionsspezifischen Daten zum Kommissionierungs-Digitaler-Doppelgänger-Datensatz modifiziert bzw. verfeinert. Eventuell kann das Erstellen des Kommissionierungs-Digitaler-Doppelgänger-Datensatzes auch iterativ ein mehrfaches Berechnen und Modifizieren von Daten des Digitaler-Doppelgänger-Datensatzes unter Berücksichtigung der Kunden- und/oder produktionsspezifische Daten umfassen.

Die produktionsspezifischen Daten beziehen sich typischerweise auf Eigenschaften oder Vorgaben innerhalb einer Fertigungsfabrik oder Fertigungslinie, in der die Personentransportanlage gefertigt werden soll. Beispielsweise können, zum Beispiel je nachdem in welchem Land oder an welchem Ort eine Fertigungsfabrik steht, in der Fertigungsfabrik verschiedene Bedingungen herrschen und/oder Vorgaben einzuhalten sein. Beispielsweise können in manchen Fertigungsfabriken bestimmte Materialien, Rohstoffe, Rohbauteile oder Ähnliches nicht verfügbar sein oder nicht verarbeitet werden. In manchen Fertigungsfabriken können Maschinen eingesetzt werden, die in anderen Fertigungsfabriken fehlen. Manche Fertigungsfabriken unterliegen aufgrund ihres Layouts Restriktionen hinsichtlich der darin zu fertigenden Personentransportanlagen bzw. Komponenten derselben. Manche Fertigungsfabriken ermöglichen einen hohen Grad an automatisierter Fertigung, wohingegen andere Fertigungsfabriken beispielsweise aufgrund niedriger Lohnkosten eher manuelle Fertigung einsetzen können. Es können noch eine Vielzahl weiterer Bedingungen und/oder Vorgaben existieren, bezüglich derer sich Fertigungsumgebungen unterscheiden können. All diese produktionsspezifischen Daten müssen typischerweise beim Planen bzw. Kommissionieren einer Personentransportanlage berücksichtigt werden, da von ihnen abhängig sein kann, in welcher Weise eine Personentransportanlage tatsächlich gebaut werden kann. Gegebenenfalls kann es erforderlich sein, den anfänglich erstellten Digitaler-Doppelgänger-Datensatz, welcher lediglich die kundenspezifischen Konfigurierungsdaten und das bestehende Tragwerk berücksichtigt hat, grundlegend zu modifizieren, um den produktionsspezifischen Daten Rechnung tragen zu können.

Vorzugsweise werden bereits beim Erstellen des Digitaler-Doppelgänger-Datensatzes statische und/oder dynamische Simulationen durchgeführt und der Kommissionierungs-Digitaler-Doppelgänger-Datensatz wird unter Berücksichtigung von Ergebnissen der Simulationen erstellt. Eine dieser dynamischen Simulationen kann beispielsweise ein Anfahrverhalten bei einer Fahrtreppe sein. Hierbei werden vom Stillstand bis zur Nenngeschwindigkeit alle Friktionskräfte sowie Spiele und die von der Antriebsmaschine abhängigen Eigenschaften simuliert. Mit diesen Simulationen können kollisionskritische Stellen überprüft, sowie die auf die einzelnen Bauteile beziehungsweise Bauteilmodell-Datensätze einwirkenden dynamischen Kräfte während des Anfahrens ermittelt werden. Insbesondere können bei diesen Simulationen auch die statischen und dynamischen Eigenschaften des bestehenden Tragwerkes simuliert und überprüft und gegebenenfalls weitere Bauteilmodell-Datensätze von Adapterbauteilen zur Verstärkung von dessen Struktur generiert werden.

Mit anderen Worten können zum Erstellen des Digitaler-Doppelgänger-Datensatzes, welcher unter Berücksichtigung der kundenspezifischen Konfigurierungsdaten die Grundlage des Kommissionierungs- Digitaler-Doppelgänger-Datensatzes bilden, Simulationen durchgeführt werden, mit denen statische und/oder dynamische Eigenschaften der kommissionierten Personentransportanlage simuliert werden. Simulationen können beispielsweise in einem Computersystem durchgeführt werden.

Statische Simulationen analysieren hierbei beispielsweise ein statisches Zusammenwirken mehrerer zusammengebauter Bauteile. Mithilfe statischer Simulationen kann beispielsweise analysiert werden, ob es beim Zusammenbau von mehreren vordefinierten Bauteilen oder basierend auf Bauteilmodell- Datensätzen fallgerecht spezifizierter Bauteile zu Komplikationen kommen kann, beispielsweise, da jedes der Bauteile mit gewissen Fertigungstoleranzen gefertigt wird, sodass es bei ungünstiger Summierung von Fertigungstoleranzen zu Problemen kommen kann.

Die vorangehend erwähnten dynamischen Simulationen bei der Erstellung des Digitaler-Doppelgänger-Datensatzes analysieren beispielsweise ein dynamisches Verhalten von Bauteilen beim Betrieb der zusammengebauten Personentransportanlage. Mithilfe dynamischer Simulationen kann beispielsweise analysiert werden, ob bewegliche Bauteile, insbesondere die umlaufend angeordneten Bauteile innerhalb einer Personentransportanlage in einer gewünschten Weise verlagert werden können oder ob beispielsweise Kollisionen zwischen relativ zu einander beweglichen Bauteilen drohen.

Aus den vorangehenden Ausführungen ist zu entnehmen, dass im Kommissionierungs-Digitaler-Doppelgänger-Datensatz zunächst lediglich Soll-Daten abgelegt sind, welche auf den Daten basieren, die beim Planen bzw. Kommissionieren der Personentransportanlage ermittelt wurden. Die Soll-Daten können unter anderem erhalten werden, wenn beispielsweise mit computergestützten Kommissionierungstools in Abhängigkeit von kundenspezifischen Konfigurierungsdaten charakterisierende Eigenschaften einer zu fertigenden Personentransportanlage berechnet werden. Beispielsweise können in dem Kommissionierungs-Digitaler-Doppelgänger-Datensatz Daten betreffend Soll-Abmessungen, Soll-Anzahlen, Soll-Materialeigenschaften, Soll-Oberflächenbeschaffenheit etc. von bei der Modernisierung der Personentransportanlage zu verwendenden Bauteilen abgelegt sein.

Der Kommissionierungs-Digitaler-Doppelgänger-Datensatz stellt somit ein virtuelles Abbild der modernisierten Personentransportanlage in ihrer Planungsphase bzw. Kommissionierungsphase dar, das heißt, bevor die Personentransportanlage anhand des Kommissionierungs-Digitaler-Doppelgänger-Datensatzes tatsächlich modernisiert wird.

Gemäß einer Ausführungsform der vorliegenden Erfindung umfasst das vorgeschlagene Modernisierungsverfahren auch ein Erstellen eines Aktualisierter-Digitaler-Doppelgänger-Datensatzes, der nachfolgend der besseren Lesbarkeit wegen als ADDD bezeichnet wird. Das Erstellen des ADDD umfasst dabei zumindest die folgenden Schritte, vorzugsweise aber nicht zwingend streng in der angegebenen Reihenfolge:
(i) Erstellen eines Fertigstellungs-Digitaler-Doppelgänger-Datensatzes basierend auf dem Kommissionierungs-Digitaler-Doppelgänger-Datensatz durch Messen von Ist-Daten, welche charakterisierende Eigenschaften von Bauteilen der modernisierten, physischen Personentransportanlage direkt nach deren Zusammenbau wiedergeben und Ersetzen von Soll-Daten in dem Kommissionierungs-Digitaler-Doppelgänger-Datensatz durch entsprechende Ist-Daten; und
(ii) Erstellen des ADDD basierend auf dem Fertigstellungs-Digitaler-Doppelgänger-Datensatz durch Modifizieren des Fertigstellungs-Digitaler-Doppelgänger-Datensatzes während des Betriebs der modernisierten, physischen Personentransportanlage unter Berücksichtigung von Messwerten, welche Änderungen von charakterisierenden Merkmale von Bauteilen der modernisierten, physischen Personentransportanlage während deren Betriebes wiedergeben.

Mit anderen Worten kann ein Erstellen des ADDD in mehreren Teilschritten erfolgen. Ausgehend von dem Kommissionierungs-Digitaler-Doppelgänger-Datensatz können dann die darin enthaltenen Soll-Daten mit zunehmendem Produktions- und Modernisierungsfortschritt sukzessive durch Ist-Daten ersetzt werden und dadurch ein Fertigstellungs-Digitaler-Doppelgänger-Datensatz generiert werden. Die Ist-Daten geben dabei charakterisierende Eigenschaften der zunächst nur hinsichtlich ihrer Soll-Konfiguration definierten Bauteile der Personentransportanlage in ihrer tatsächlichen Konfiguration an. Die Ist-Daten können durch manuelles und/oder maschinelles Vermessen der charakterisierenden Eigenschaften der Bauteile ermittelt werden. Hierzu können separate Messvorrichtungen und/oder in Bauteile integrierte oder an Bauteile angeordnete Sensoren eingesetzt werden. Dabei können die in dem Datensatz enthaltenen Daten sukzessive verfeinert und präzisiert werden, so dass die charakterisierenden Eigenschaften der in der modernisierten Personentransportanlage verbauten Bauteile mit fortlaufender Erstellung immer genauer hinsichtlich ihrer tatsächlichen aktuellen Konfiguration wiedergegeben werden. Eine Verfeinerung wird insbesondere durch die Übertragung von Messwerten erreicht, die ein nachführen der charakterisierenden Eigenschaften der von diesen Messwerten betroffenen Bauteilmodell-Datensätzen erlaubt und dadurch eine äußerst präzise Simulationsumgebung zur Beurteilung aktueller und zukünftiger (Schadens-) Ereignisse schafft. Die während des Betriebs erfassten Messwerte stammen vorzugsweise von einer in der modernisierten Personentransportanlage verbauten Sensorik.

Der ADDD stellt zwar ein sehr präzises, virtuelles Abbild der modernisierten Personentransportanlage während des Betriebs derselben und unter Berücksichtigung beispielsweise verschleißbedingter Änderungen im Vergleich zu den ursprünglich direkt nach der Fertigstellung gemessenen charakterisierenden Eigenschaften dar und kann somit als ADDD zum kontinuierlichen bzw. wiederholten Überwachen der Eigenschaften der Personentransportanlage verwendet werden.

Es müssen aber nicht zwingend alle als Soll-Daten vorhandene, charakterisierende Eigenschaften eines Bauteils durch Ist-Daten des Bauteils oder durch die auf Basis des Belastungsprofils errechneten charakterisierenden Eigenschaften aktualisiert werden. Demzufolge sind die charakterisierenden Eigenschaften der meisten Bauteile eines Fertigstellungs-Digitaler-Doppelgänger-Datensatzes und des daraus entstandenen ADDD durch eine Mischung von Soll-Daten, Ist-Daten und errechneten Daten charakterisiert.

Konkrete Ausgestaltungen des Modernisierungsverfahrens werden weiter unten mit Bezug auf bevorzugte Ausführungsformen dargelegt.

Ausführungsformen des hierin vorgestellten Modernisierungsverfahrens einer bestehenden Personentransportanlage können mithilfe einer hierfür speziell konfigurierten Vorrichtung durchgeführt werden. Die Vorrichtung kann einen oder mehrere Computer umfassen. Insbesondere kann die Vorrichtung aus einem Computernetzwerk gebildet sein, welches Daten in Form einer Datenwolke (Cloud) verarbeitet. Die Vorrichtung kann hierfür über einen Speicher verfügen, in dem die Daten des Dreidimensionaler-Tragwerkmodell-Datensatzes, der Bauteilmodell-Datensätze, des Digitaler-Doppelgänger-Datensatzes bis hin zum ADDD gespeichert werden können, beispielsweise in elektronischer oder magnetischer Form. Die Vorrichtung kann ferner über Datenverarbeitungsmöglichkeiten verfügen. Beispielsweise kann die Vorrichtung einen Prozessor aufweisen, mithilfe dessen Daten all dieser Datensätze verarbeitet werden können. Die Vorrichtung kann ferner über Schnittstellen verfügen, über die Daten in die Vorrichtung eingegeben und/oder aus der Vorrichtung ausgegeben werden können. Die Vorrichtung kann auch räumlich verteilt implementiert sein, beispielsweise wenn Daten über mehrere Computer verteilt in einer Datenwolke verarbeitet werden.

Insbesondere kann die Vorrichtung programmierbar sein, das heißt durch ein geeignet programmiertes Computerprogrammprodukt dazu veranlasst werden, Computerverarbeitbare Schritte und Daten des erfindungsgemäßen Modernisierungsverfahrens auszuführen oder zu steuern. Das Computerprogrammprodukt kann Anweisungen oder Code enthalten, welche beispielsweise den Prozessor der Vorrichtung dazu veranlassen, Daten des Digitaler-Doppelgänger-Datensatzes zu erstellen, abzuspeichern, auszulesen, zu verarbeiten, zu modifizieren, etc. Das Computerprogrammprodukt kann in einer beliebigen Computersprache verfasst sein.

Das Computerprogrammprodukt kann auf einen beliebigen computerlesbaren Medium gespeichert sein, beispielsweise einem Flash-Speicher, einer CD, einer DVD, RAM, ROM, PROM, EPROM, etc. Das Computerprogrammprodukt und/oder die damit zu verarbeitenden Daten können auch auf einem Server oder mehreren Servern gespeichert sein, beispielsweise in einer Datenwolke, von wo aus sie über ein Netz, beispielsweise das Internet, heruntergeladen werden können.

Abschließend wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Figur 1 veranschaulicht die Verfahrensschritte des erfindungsgemäßen Modernisierungsverfahrens einer bestehenden Personentransportanlage sowie die zur Durchführung erforderlichen Interaktionen in Bezug auf die das Modernisierungsverfahren begleitenden Datensätze.

Figur 2 zeigt in dreidimensionaler Ansicht einen Dreidimensionaler-Tragwerkmodell-Datensatz eines bestehenden, als Fachwerk ausgebildeten Tragwerks einer zu modernisierenden Personentransportanlage sowie dessen Kernraum.

Figur 3 zeigt einen Querschnitt des in der Figur 2 dargestellten Dreidimensionaler-Tragwerkmodell-Datensatzes, sowie angedeutet den Querschnitt eines provisorischen Tragwerkmodell-Datensatzes, einen Bauteilmodell-Datensatz eines Adapterbauteils sowie Bauteilmodell-Datensätze von neu einzufügenden Komponenten.

Figur 4 zeigt eine mögliche Erfassung von Bildaufnahmen zur Generierung des in der Figur 2 dargestellten Dreidimensionaler-Tragwerkmodell-Datensatzes.

Figur 5 zeigt in dreidimensionaler Ansicht ein Adapterbauteil, wie er händisch konstruiert würde.

Figur 6 zeigt in dreidimensionaler Ansicht ein Adapterbauteil mit denselben Schnittstellenmerkmalen wie das Adapterbauteil der Figur 5, jedoch mit einem generativen funktionsgetriebenen Design.

Die Figuren sind lediglich schematisch und nicht maßstabsgetreu. Gleiche Bezugszeichen bezeichnen in den verschiedenen Figuren gleiche oder gleichwirkende Merkmale.

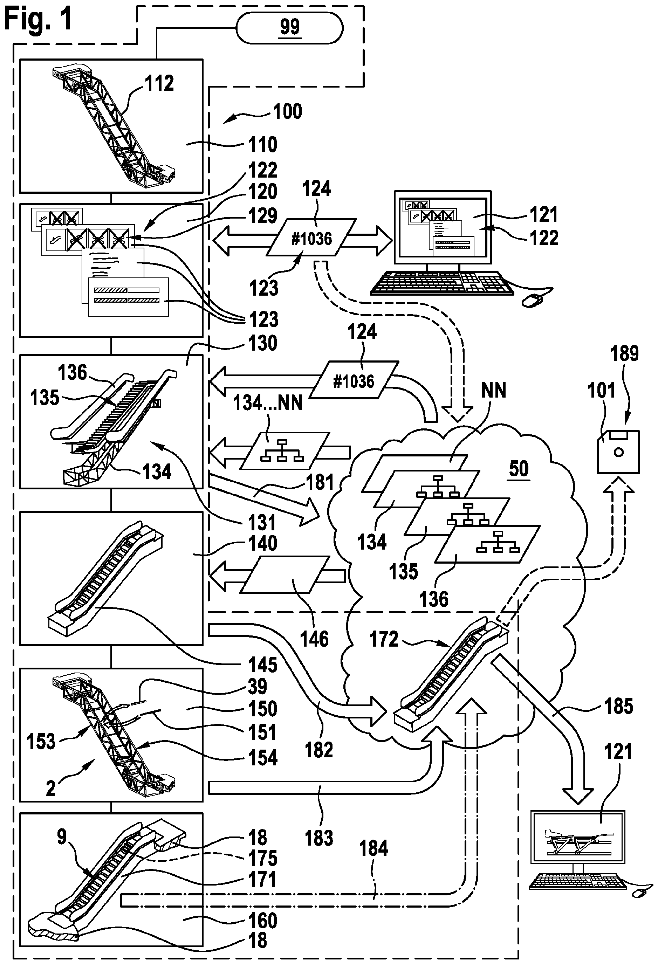

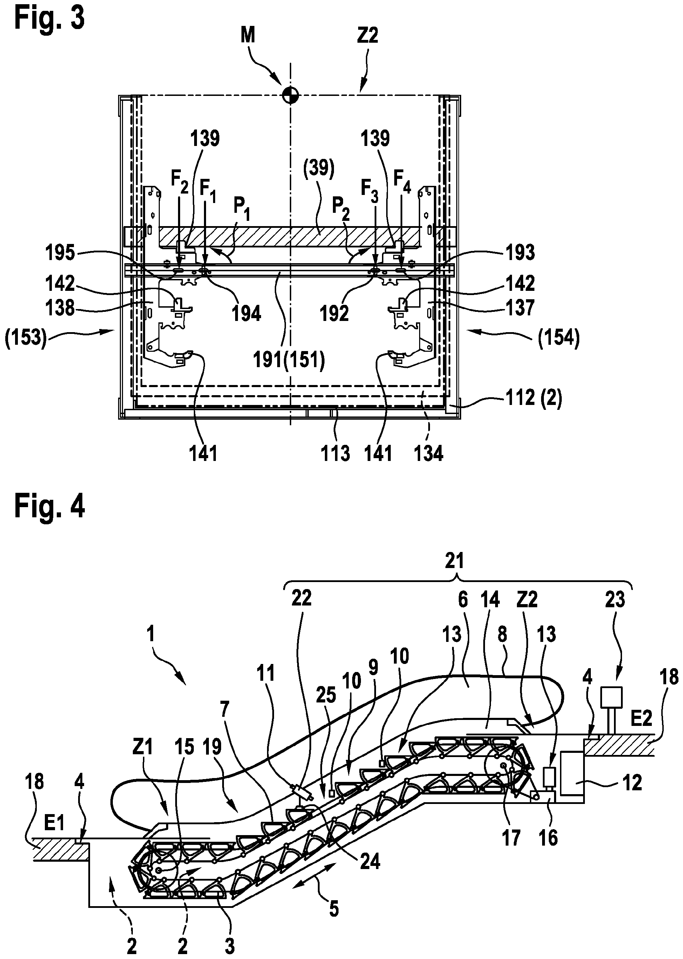

In der Figur 1 sind anhand eines Blockdiagramms die wesentlichen Verfahrensschritte 110 bis 160 des erfindungsgemäßen Modernisierungsverfahrens 100 (markiert mittels unterbrochener Linie) einer bestehenden Personentransportanlage 1 (siehe Figur 4) sowie die zur Durchführung des Modernisierungsverfahrens 100 erforderlichen Interaktionen mit den das Modernisierungsverfahren 100 begleitenden Datensätzen, Computersystemen 121 und Speichermedien wie beispielsweise eine Datenwolke (Cloud) 50 dargestellt. Die hauptsächlichen Verfahrensschritte des Modernisierungsverfahrens 100 sind gegliedert in:
- im ersten Verfahrensschritt 110 die Erzeugung eines Dreidimensionaler-Tragwerkmodell-Datensatzes 112 des bestehenden Tragwerkes 2 der bestehenden Personentransportanlage 1;
- im zweiten Verfahrensschritt 120 eine Erfassung von kundenspezifischen Konfigurierungsdaten 123;
- im dritten Verfahrensschritt 130 eine Erstellung eines Digitaler-Doppelgänger-Datensatzes 131 aus Bauteilmodell-Datensätzen 134... NN unter Einbeziehung des Dreidimensionaler-Tragwerkmodell-Datensatzes 112 des bestehenden Tragwerkes 2 und den kundenspeifischen Konfigurierungsdaten 123;
- im vierten Verfahrensschritt 140 eine Überführung des Digitaler-Doppelgänger-Datensatzes 131 in einen Kommissionierungs-Digitaler-Doppelgänger-Datensatz 145 durch Hinzufügen von produktionsspezifischen Daten;
- im fünften Verfahrensschritt 150 die Adaption des bestehenden Tragwerkes 2, die Fertigung von physischen Bauteilen 151 und deren Einbau in und an das bestehende Tragwerk 2 anhand des Kommissionierungs-Digitaler-Doppelgänger-Datensatzes 145 und Aktualisierung des Kommissionierungs-Digitaler-Doppelgänger-Datensatzes 145 zum Fertigstellungs-Digitaler-Doppelgänger-Datensatz; sowie
- im sechsten Verfahrensschritt 160 die Inbetriebnahme der modernisierten Personentransportanlage 171 und die Aktualisierung des Fertigstellungs-Digitaler-Doppelgänger-Datensatzes zum Aktualisierter-Digitaler-Doppelgänger-Datensatz ADDD 172.

Sämtliche Datenverarbeitung und die Datenspeicherung sowie die schrittweise Erstellung des ADDD 172 erfolgt hierbei beispielhaft über die Datenwolke 50.

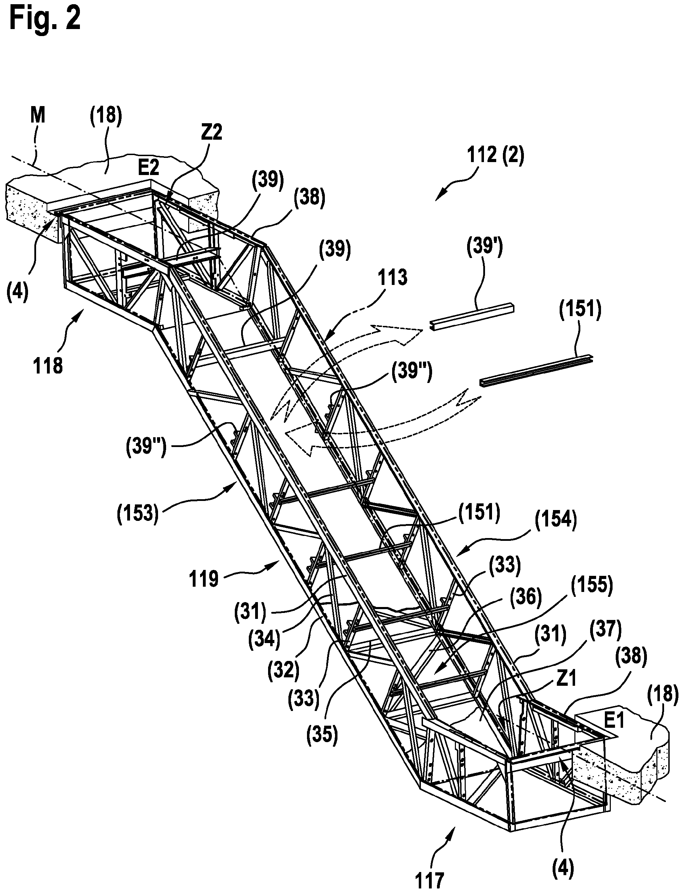

Die Ausgangslage 99 zur Ausführung des erfindungsgemäßen Modernisierungsverfahrens 100 kann ein Auftrag zur Modernisierung einer als Fahrtreppe oder Fahrsteig ausgestalteten Personentransportanlage 1 sein, die beispielsweise in einem Shoppingcenter, in einem Flughafengebäude oder in einer U-Bahnstation seit Jahren installiert ist und dort ihren Dienst verrichtet. Üblicherweise wird bei Modernisierungen von Fahrtreppen und Fahrsteigen nur das wertvollste Bauteil der bestehenden Personentransportanlage 1 beibehalten, nämlich deren Tragwerk 2. Dieses brückenähnliche Gebilde ist zwischen zwei Auflagerstellen 4 des entsprechenden Bauwerkes 18 angeordnet (siehe Figur 2) und verursacht nicht nur bei seiner Herstellung die meisten Kosten, sondern durch seine Sperrigkeit auch die höchsten Transportkosten sowie Kosten am bestehenden Bauwerk 18, wenn beispielsweise zusätzliche Öffnungen in dessen Wände gemacht werden müssen, um eine Fahrtreppe oder einen Fahrsteig komplett ab Werk, in das bestehende Bauwerk 18 einzubringen.

Damit die zwecks Modernisierung neu einzufügenden Bauteile 151 in das bestehende Tragwerk 2 eingebaut werden können, müssen in einem ersten Verfahrensschritt 110 dessen Dimensionen erfasst werden. Hierzu wird ein Dreidimensionaler-Tragwerkmodell-Datensatz 112 des bestehenden Tragwerkes 2 erzeugt. Eine mögliche Erzeugung des Dreidimensionaler-Tragwerkmodell-Datensatzes 112 wird weiter unten in Zusammenhang mit der Figur 4 ausführlicher beschrieben.

Aufgrund des aktuellen und gegebenenfalls auch zukünftigen Einsatzprofils der bestehenden Personentransportanlage 1 und den Abmaßen des bestehenden Tragwerkes 2 wird im zweiten Verfahrensschritt 120 die gewünschte, modernisierte Personentransportanlage 171 konfiguriert.

Dazu kann beispielsweise ein Internetbasiertes Konfigurierungsprogramm zur Verfügung stehen, welches dauerhaft oder temporär in einem Computersystem 121 installiert ist. Mittels verschiedener Eingabemasken 122 werden kundenspezifische Konfigurierungsdaten 123 abgefragt und in einem Logfile 124 unter einer Identifizierungsnummer gespeichert. Das Konfigurierungsprogramm kann sehr viele Optionen abdecken, die der Kunde nach seinen Bedürfnissen auswählen kann. Wie jedoch mittels durchgestrichener Auswahlfelder 129 angedeutet, werden bei einer Modernisierung gewisse Optionen durch das bestehende Tragwerk 2 ausgeschlossen. Das bedeutet, dass das Konfigurierungsprogramm auf bestimmte charakterisierende Eigenschaften des im ersten Verfahrensschritt 110 erstellten Dreidimensionaler-Tragwerkmodell-Datensatzes 112 zurückgreift, um die Freigabe von Optionen zu steuern. Solche charakterisierenden Eigenschaften können die Breite des in der Figur 2 mit Strich-Doppelpunktierter Linie dargestellten Kernraumes 113, die räumlichen Positionen der durch die horizontalen Abschnitte 117, 118 des bestehenden Tragwerkes 2 definierten Zutrittsbereiche, sowie die Länge, die räumliche Lage und der Steigungswinkel des zwischen den horizontalen Abschnitten liegenden Mittelteiles 119 des bestehenden Tragwerkes 2 sein.

Das Logfile 124 kann beispielsweise in der Datenwolke 50 gespeichert werden. Optional kann dem die Modernisierung planenden Architekten des Kunden anhand seiner kundenspezifischen Konfigurierungsdaten 123 ein digitales Hüllenmodell zur Verfügung gestellt werden, welches er zwecks Visualisierung eines geplanten Gebäudeumbaus in sein digitales Gebäudemodell einfügen kann. Als kundenspezifische Konfigurierungsdaten 123 werden beispielsweise nebst den sich aus dem Dreidimensionaler-Tragwerkmodell-Datensatz 112 des bestehenden Tragwerkes 2 ergebenden Koordinaten und Abmessungen, insbesondere Ausgestaltungsmerkmale wie der Balustraden-Typ, Farben und Texturen von Verkleidungsteilen, gegebenenfalls die gewünschte Förderleistung, etc. abgefragt.

Wenn der Architekt mit der durch ihn konfigurierten Personentransportanlage zufrieden ist, kann er die Modernisierung unter Angabe der kundenspezifischen Konfigurierungsdaten 123, beispielsweise durch einen Hinweis auf die Identifizierungsnummer oder den Identifizierungscode des Logfiles 124, beim Hersteller in Auftrag geben.

Bei einem Bestellungseingang, dargestellt durch den dritten Verfahrensschritt 130, der auf das Logfile 124 referenziert wird, wird zunächst ein Digitaler-Doppelgänger-Datensatz 131 erstellt, der eine Soll-Konfiguration angibt. Beim Erstellen des Digitaler-Doppelgänger-Datensatzes 131 werden Bauteilmodell-Datensätze 134, 135, ..., NN verwendet, die für eine Fertigung der physischen Bauteile 151 vorgesehen sind. Das heißt, dass für jedes physische Bauteil ein Bauteilmodell-Datensatz 134, 135, ..., NN beispielsweise in der Datenwolke 50 abgespeichert ist, der alle charakterisierenden Eigenschaften (Abmaße, Toleranzen, Werkstoffeigenschaften, Oberflächengüte, Schnittstellenmerkmale zu weiteren Bauteilmodell-Datensätzen, etc.) dieses Bauteils in einer Soll-Konfiguration enthält. Einige der zur Verfügung stehenden Bauteilmodell-Datensätze 134, 135, ..., NN definieren hierbei das Bauteil nicht vollständig, sondern müssen durch die kundenspezifischen Konfigurierungsdaten ergänzt beziehungsweise vollständig definiert werden.

Mittels der kundenspezifischen Konfigurierungsdaten 123 werden nun die zur Erstellung des Digitaler-Doppelgänger-Datensatzes 131 erforderlichen Bauteilmodell-Datensätze 134, 135, ..., NN anhand logischer Verknüpfungen automatisiert ausgewählt sowie deren Anzahl und Anordnung im dreidimensionalen Raum bestimmt. Hierzu wird vorzugsweise nicht direkt mit dem Dreidimensionaler-Tragwerkmodell-Datensatz 112 des bestehenden Tragwerkes 2 gearbeitet, sondern zuerst ein provisorischer Tragwerkmodell-Datensatz 134 erstellt. Dieser wird alleine aufgrund der kundenspezifischen Konfigurierungsdaten 123, welche auch die zur Auslegung des provisorischen Tragwerkmodell-Datensatzes 134 erforderlichen, aus dem Dreidimensionaler-Tragwerkmodell-Datensatz 112 extrahierten Angaben enthalten, ausgelegt. Der provisorische Tragwerkmodell-Datensatz 134 wird eigentlich gar nicht gebraucht, er ist aber auf die zur Modernisierung vorzusehenden, neu einzufügenden Bauteile bzw. deren Bauteilmodell-Datensätze 135, ..., NN ideal abgestimmt und weist als zentraler Bauteilmodell-Datensatz die meisten Schnittstellenmerkmale zu angrenzenden Bauteilmodell-Datensätzen 135, ..., NN sowie die räumlichen Abstände dieser Schnittstellenmerkmale zueinander auf. Der provisorische Tragwerkmodell-Datensatz 134 kann alle relevanten charakterisierenden Merkmale aufweisen, so dass, ergänzt durch produktionsspezifische Daten, mit diesem auch ein physisches Tragwerk hergestellt werden könnte. Wie weiter unten erklärt, wird der provisorische Tragwerkmodell-Datensatz 134 zum Abgleich des Dreidimensionaler-Tragwerkmodell-Datensatzes 112 des bestehenden Tragwerkes 2 benötigt.

Die zwecks Modernisierung einzufügenden, neuen Bauteile 151 respektive deren Bauteilmodell-Datensätze 135, ..., NN werden anhand der kundenspezifischen Konfigurierungsdaten 123 und insbesondere des in der Figur 2 beschriebenen, ermittelten Kernraumes 113 ausgewählt und ausgelegt. Ferner wird der provisorische Tragwerkmodell-Datensatz 134 in seinen Dimensionen so ausgelegt, dass ein in diesen passenden Bauteilmodell-Datensatz eines Transportbands 135 auch in den Kernraum 113 des Dreidimensionaler-Tragwerkmodell-Datensatzes 112 des bestehenden Tragwerkes 2 passt. Durch die Verwendung eines provisorischen Tragwerkmodell-Datensatzes 134 bleiben logischerweise etwaige Konturen von Bauteilen des bestehenden Tragwerkes 2 unberücksichtigt, die in den Kernraum 113 hineinragen oder diesen durchdringen. Eine Berücksichtigung dieser Konturen würde den Einbau und die Funktion der neu einzufügenden Bauteile nicht nur behindern, sondern gegebenenfalls sogar eine Modernisierung verunmöglichen. Aus diesem Grund werden in den Kernraum 113 hineinragende oder diesen durchdringende Konturen des Dreidimensionaler-Tragwerkmodell-Datensatzes 112 des bestehenden Tragwerkes 2 als zu entfernen markiert (händisch oder automatisiert). Deren physische Pendants werden später bei der Aufbereitung des bestehenden Tragwerkes 2 im fünften Verfahrensschritt 150 entfernt. Beispiele solcher Konturen sind insbesondere Querstreben 39, welche die beiden Seitenstrukturen 153, 154 des bestehenden Tragwerkes 2 gegeneinander abstützen oder an den Seitenstrukturen 153, 154 angeordnete Spanten, die der Abstützung und Befestigung von Führungsschienen dienen.

Anschließend werden die Bauteilmodell-Datensätze 135, ..., NN sowie der provisorische Tragwerkmodell-Datensatz 134 mittels ihrer Schnittstellenmerkmale zu einem entsprechenden Digitaler-Doppelgänger-Datensatz 131 der später modernisierten Personentransportanlage 171 vereinigt. Hierbei ist es offensichtlich, dass eine Fahrtreppe oder ein Fahrsteig aus einigen tausend Einzelteilen besteht (repräsentiert durch die Bezugszeichen ..., NN) und dementsprechend ebenso viele Bauteilmodell-Datensätze 134, 135, ..., NN zur Erstellung eines Digitaler-Doppelgänger-Datensatzes 131 herangezogen und verarbeitet werden müssen. Der Digitaler-Doppelgänger-Datensatz 131 weist für alle herzustellenden beziehungsweise zu beschaffenden physischen Bauteile Soll-Daten auf, welche charakterisierende Eigenschaften der zum Bau erforderlichen Bauteile der Personentransportanlage 1 in einer Soll-Konfiguration wiedergeben. Der Digitaler-Doppelgänger-Datensatz 131 kann wie durch den Pfeil 181 dargestellt, in der Datenwolke 50 abgespeichert werden.

Zuletzt wird beim Digitaler-Doppelgänger-Datensatz 131 der aus den kundenspezifischen Konfigurierungsdaten generierte, provisorische Tragwerkmodell-Datensatz 134 durch den Dreidimensionaler-Tragwerkmodell-Datensatz 112 des bestehenden Tragwerkes 2 ersetzt. Selbstverständlich werden beim Ersetzen alle räumlichen Positionen der verbleibenden Bauteilmodell-Datensätze 135, ..., NN des Digitaler-Doppelgänger-Datensatzes 131 zueinander, beziehungsweise deren räumliche Anordnung zueinander, beibehalten. Ebenso können bestimmte räumliche Positionsinformationen des provisorischen Tragwerkmodell-Datensatzes 134, wie beispielsweise dessen Mittellängsachse M (siehe Figur 2) und die horizontalen Ebenen Z1, Z2 von dessen Zutrittsbereichen oberhalb der horizontalen Abschnitte 117, 118 des bestehenden Tragwerkes 2, beibehalten werden, um an diesen den einzufügenden Dreidimensionaler-Tragwerkmodell-Datensatz 112 des bestehenden Tragwerkes 2 auszurichten. Ferner müssen die Schnittstellenmerkmale des provisorischen Tragwerkmodell-Datensatzes 134 gewissermaßen auf den Dreidimensionaler-Tragwerkmodell-Datensatz 112 des bestehenden Tragwerkes 2 mittels Bauteilmodell-Datensätzen von Adapterbauteilen 191 (siehe Figur 3) übertragen werden. Die Bauteilmodell-Datensätze von Adapterbauteilen 191 können unter Berücksichtigung der Schnittstellenmerkmale des provisorischen Tragwerkmodell-Datensatzes 134 des Digitaler-Doppelgänger-Datensatzes 131, den geometrischen Daten des Dreidimensionaler-Tragwerkmodell-Datensatzes 112 des bestehenden Tragwerkes 2 und unter Nichtbeachtung von dessen markierten Konturen erzeugt werden. Dies wird weiter unten anhand der Figur 3 ausführlicher beschrieben.

Im vierten Verfahrensschritt 140 wird durch ein Ergänzen des digitalen, dreidimensionalen Doppelgänger-Datensatzes 131 mit produktionsspezifischen Daten 146 hernach der Kommissionierungs-Digitaler-Doppelgänger-Datensatz 145 erzeugt, der alle für die Produktion der dereinst modernisierten Personentransportanlage 171 erforderlichen Fertigungsdaten enthält. Solche produktionsspezifischen Daten 146 können beispielsweise den Produktionsstandort, den an diesem Produktionsstandort verwendbaren Werkstoff, die zur Produktion des physischen Bauteiles 151 eingesetzten Fertigungsmittel, Durchlaufzeiten und dergleichen mehr enthalten. Dieser Ergänzungsschritt wird, wie durch den Pfeil 182 dargestellt, am noch im Aufbau befindlichen ADDD 172 vollzogen.

Der Kommissionierungs-Digitaler-Doppelgänger-Datensatz 145 kann gemäß dem fünften Verfahrensschritt 150 anschließend in den Fertigungsanlagen des Herstellerwerkes verwendet werden, um die Produktion der physischen Bauteile 151 der zu modernisierenden Personentransportanlage 171 zu ermöglichen. Logischerweise wird aber kein neues Tragwerk hergestellt, sondern wie im Blockdiagramm-Bild erkennbar, zuerst das bestehende Tragwerk 2 überarbeitet. Hierbei müssen die im Dreidimensionaler-Tragwerkmodell-Datensatz 112 markierten Konturen beziehungsweise Bauteile 39 am bestehenden Tragwerk 2 entfernt werden. Des Weiteren muss das bestehende Tragwerk 2 mit den physischen Adapterbauteilen 151 ergänzt werden, so dass dieses hernach alle physischen Schnittstellenmerkmale zu den anzubauenden Bauteilen der modernisierten Personentransportanlage 171 aufweist, wie sie ursprünglich durch den provisorischen Tragwerkmodell-Datensatz 134 definiert worden sind.

Im Kommissionierungs-Digitaler-Doppelgänger-Datensatz 145 sind diese Überarbeitungsschritte des bestehenden Tragwerkes 2 sowie die weiteren Montageschritte zur modernisierten, physischen Personentransportanlage 171 definiert.

Bei und nach der Fertigung der physischen Bauteile sowie beim Zusammenbau der daraus entstehenden, modernisierten Personentransportanlage 171 werden zumindest ein Teil der charakterisierenden Eigenschaften von Bauteilen und montierten Baugruppen beispielsweise durch Vermessen und zerstörungsfreie Prüfverfahren erfasst und diese den entsprechenden virtuellen Bauteilen beziehungsweise Bauteilmodell-Datensätzen 135, ..., NN zugeordnet. Hierbei ersetzen als charakterisierende Eigenschaften die an den physischen Bauteilen gemessenen IST-Daten die zugeordneten Soll-Daten des Kommissionierungs-Digitaler-Doppelgänger-Datensatzes 145. Mit dieser durch den Pfeil 183 dargestellten Übertragung wandelt sich mit fortlaufendem Produktionsfortschritt der Kommissionierungs-Digitaler-Doppelgänger-Datensatz 145 immer mehr hin zum ADDD 172. Dieser ist jedoch immer noch nicht ganz komplett, sondern bildet zuerst einen sogenannten Fertigstellungs-Digitaler-Doppelgänger-Datensatz.

Nach ihrer Fertigstellung kann die modernisierte, physische Personentransportanlage 171 wie im sechsten Verfahrensschritt 160 dargestellt, in Betrieb genommen werden. Da schon bei der ersten Inbetriebnahme Betriebsdaten anfallen, werden auch diese Daten auf den Fertigstellungs-Digitaler-Doppelgänger-Datensatz übertragen und in charakterisierende Eigenschaften der davon betroffenen Bauteilmodell-Datensätze 135, ..., NN umgerechnet. Mit dieser durch den strichpunktierten Pfeil 184 dargestellten Aktualisierung wandelt sich der Fertigstellungs-Digitaler-Doppelgänger-Datensatz in den ADDD 172, der ebenso wie die modernisierte, physische Personentransportanlage 171 die volle Einsatzbereitschaft erreicht. Ab diesem Zeitpunkt kann gemäß dem Pfeil 185 der ADDD 172 jederzeit in das Computersystem 121 geladen und zur detaillierten Analyse des Zustandes der modernisierten, physischen Personentransportanlage 171 eingesetzt werden.

Der sechste Verfahrensschritt 160 bildet jedoch nicht einen eigentlichen Abschluss des erfindungsgemäßen Modernisierungsverfahrens 100, da der ADDD 172 während seiner Lebensdauer immer wieder aktualisiert wird. Dieser Abschluss erfolgt erst mit dem Lebensdauerende der modernisierten, physischen Personentransportanlage 171, wobei hier ein letztes Mal die Daten des ADDD 172 nutzbringend für den Entsorgungsvorgang der physischen Bauteile eingesetzt werden können.

Der ADDD 172 wird wie weiter oben ausführlich beschrieben und durch den strichpunktierten Pfeil 184 symbolisiert, während der gesamten Lebensdauer der modernisierten Personentransportanlage 171 kontinuierlich und/oder periodisch durch die Übertragung von Messdaten aktualisiert. Diese Messdaten können sowohl von einer in der Personentransportanlage verbauten Sensorik 175, als auch durch eine Eingabe beispielsweise durch das Wartungspersonal erfasst und auf den ADDD 172 übertragen werden. Selbstverständlich lässt sich der ADDD 172 zusammen mit den zur Arbeit mit dem ADDD 172 erforderlichen Programmanweisungen 189 auf einem beliebigen computerlesbaren Medium wie beispielsweise eine Diskette oder einer Datenwolke 50 als Computerprogrammprodukt 101 speichern.

Die Figur 2 zeigt in dreidimensionaler Ansicht einen Dreidimensionaler-Tragwerkmodell-Datensatz 112 eines bestehenden, als Fachwerk ausgebildeten Tragwerks 2 einer zu modernisierenden Personentransportanlage 1 sowie dessen, mit Strich-Doppelpunktierter Linie dargestellten Kernraum 113. Da der Dreidimensionaler-Tragwerkmodell-Datensatz 112 ein exaktes, virtuelles Abbild des bestehenden, Tragwerkes 2 ist, sind zum besseren Verständnis in der Figur 2 ebenfalls die Bezugszeichen von physischen Bauteilen aufgeführt, diese sind jedoch in Klammer angegeben.

Wie bereits in Zusammenhang mit dem ersten Verfahrensschritt 110 der Figur 1 erwähnt, muss zuerst der Dreidimensionaler-Tragwerkmodell-Datensatz 112 erstellt werden. Es stehen verschiedene Möglichkeiten zur Auswahl, vom bestehenden Tragwerk 2 ein Dreidimensionaler-Tragwerkmodell-Datensatz 112 zu erzeugen. Die aufwändigste ist ein händisches Ausmessen des bestehenden Tragwerkes 2 nachdem alle anderen bestehenden Teile der bestehenden Personentransportanlage 1 entfernt wurden. Die ausgemessenen Messdaten können anschließend beispielsweise in ein 3D-CAD System übertragen werden. Eine weitere Möglichkeit ist der Einsatz von Laserscannern oder TOF-Kameras, die ein dreidimensionales, virtuelles Abbild des bestehenden Tragwerks 2 erfassen können. Hierbei müssen aber aus mehreren Positionen rund um das Tagwerk 2 Aufnahmen gemacht, und diese zusammengesetzt werden, wobei aufnahmebedingte Verzerrungen korrigiert werden müssen. Nach der Aufbereitung und dem Zusammensetzen der Aufnahmen, kann das daraus entstandene dreidimensionale Abbild in ein Computersystem 121 (siehe Figur 1) eingelesen und mit bekannten Softwarealgorithmen (z.B. Tracing) in einen Dreidimensionaler-Tragwerkmodell-Datensatz 112 des bestehenden Tragwerkes 2 konvertiert werden. Eine weitere sehr effiziente Methode, den Dreidimensionaler-Tragwerkmodell-Datensatz 112 zu erzeugen, wird weiter unten mit Bezug auf die Figur 4 ausführlicher beschrieben.

Sobald ein Dreidimensionaler-Tragwerkmodell-Datensatz 112 des bestehenden Tragwerkes 2 erzeugt worden ist, kann dessen Kernraum 113 ermittelt werden. Tragwerke 2 von Fahrtreppen und Fahrsteigen aller Hersteller können zwar sehr unterschiedlich ausgestaltet sein. Sie haben aber alle bezogen auf ihre Längserstreckung eine U-förmigen Querschnitt, indem jeweils zwei Seitenstrukturen 153, 154 durch einen Boden oder eine Bodenstruktur 155 miteinander verbunden sind. Mit anderen Worten ausgedrückt, weist das bestehende Tragwerk 2 beziehungsweise dessen Dreidimensionaler-Tragwerkmodell-Datensatz 112 zwei Seitenstrukturen 153, 154 auf, die mittels einer Bodenstruktur 155 miteinander verbunden sind. Im vorliegenden Ausführungsbeispiel der Figur 2 bestehen die beiden Seitenstrukturen 153, 154 aus fachwerkartigen Strukturen, die jeweils aus Obergurten 31, Untergurten 32, diese verbindende Steher 33 und Diagonalstreben 34 gebildet sind. Die die beiden Seitenstrukturen 153, 154 verbindende Bodenstruktur 155 ist aus Querholmen 35 und Diagonalholmen 36 gebildet, welche durch ein Bodenblech 37 bedeckt sind.

Um die Einbaulage zu zeigen, sind ferner die Auflagestellen 4 in zwei Ebenen E1, E2 des Bauwerkes 18 dargestellt, an denen die beiden Enden des bestehenden Tragwerkes 2 aufliegen. Die in den horizontalen Abschnitten 117, 118 des bestehenden Tagwerkes 2 angeordneten Obergurt-Abschnitte 38 sind definitionsgemäß mit Ihren Oberkanten in den beiden Ebenen der Zutrittsbereiche Z1, Z2 angeordnet. Das heißt, dass beim Ersetzen des provisorischen Tragwerkmodell-Datensatzes 134 im Digitaler-Doppelgänger-Datensatz 131 durch den Dreidimensionaler-Tragwerkmodell-Datensatz 112, die Oberkanten von dessen horizontalen Obergurt-Abschnitten in denselben Ebenen der Zutrittsbereiche Z1, Z2 wie die Oberkanten der horizontalen Obergurt-Abschnitte des provisorischen Tragwerkmodell-Datensatzes 134 angeordnet sein müssen. Quer zur Längserstreckung wird die Mittellängsachse M des Dreidimensionaler-Tragwerkmodell-Datensatzes 112 an der Mittellängsachse M des provisorischen Tragwerkmodell-Datensatzes 134 ausgerichtet.

Der vorangehend erwähnte Kernraum 113 wird definitionsgemäß durch die Innenseiten der Seitenstrukturen 153, 154 und der Bodenstruktur 155 begrenzt und ist üblicherweise aufgrund der Einbaulage des bestehenden Tragwerkes 2, gegen oben offen. Gattungsgemäß können verschiedene Konturen in den Kernraum 112 ragen oder durchragen diesen sogar. An diesen sind die "alten" beziehungsweise vor der Durchführung des Modernisierungsverfahrens 100 bestehenden Bauteile wie beispielsweise ein Antriebsmaschinenrahmen oder Führungsschienen der bestehenden Personentransportanlage 1 befestigt. Da diese Konturen wie in Zusammenhang mit der Figur 1 erwähnt, nicht mehr gebraucht werden, können sie als zu entfernend markiert werden. Die markierten Konturen werden wie anhand der bestehenden Querstreben 39 dargestellt, sowohl im Dreidimensionaler-Doppelgänger-Datensatz 112 als auch im bestehenden Tragwerk 2 entfernt und sofern erforderlich, durch ein geeignet konstruiertes Adapterbauteil ersetzt. Im vorliegenden Ausführungsbeispiel der Figur 2 ist vorgesehen, die bestehenden Quersterben 39 an den Grenzen des Kernraumes 113 durchzusägen, so dass ein Rest 39" am Steher 33 verbleibt und nur die den Kernraum 113 durchdringende Kontur 39' der bestehenden Querstrebe 39 entfernt wird. Anschließend kann als Adapterbauteil eine, den neu einzufügenden Bauteilmodell-Datensätzen 135, ..., NN beziehungsweise neu einzubauenden, physischen Bauteilen angepasste, neue Querstrebe 151 an geeigneter, durch den Digitaler-Doppelgänger-Datensatz 131 vorgegebener Position an den Stehern 33 befestigt werden.

Auch die Figur 3 zeigt diesen Vorgang anhand eines, orthogonal zur Ebene des Zutrittsbereiches Z2 und der Mittellängsachse M angeordneten Querschnitts des in der Figur 2 dargestellten Dreidimensionaler-Tragwerkmodell-Datensatzes 112. Die in diesem Querschnitt einzufügenden, neuen Bauteilmodell-Datensätze sind diejenigen von Spanten 137, 138 und Führungsschienen 139, 141, 142. Dabei ist deutlich erkennbar, dass die neuen Führungsschienen 139 genau dort durchgeführt sind, wo die bestehende Querstrebe 39 im bestehenden Tragwerk 2 angeordnet ist. Entsprechend wurde im Dreidimensionaler-Tragwerkmodell-Datensatz 112 dessen Kontur mittels einer Schraffur beispielhaft dargestellt, markiert. Die Positionierung der neu einzufügenden Spanten 137, 138 und Führungsschienen 139, 141, 142 ist durch den mittels unterbrochener Linien dargestellten provisorischen Tragwerkmodell-Datensatz 134 vorgegeben, der einerseits an der Ebene des Zutrittsbereiches Z2 und andererseits an der Mittellängsachse M des Dreidimensionaler-Tragwerkmodell-Datensatzes 112 ausgerichtet ist.

Dieser weist somit die als Raumkoordinaten hinterlegten Schnittstellenmerkmale 192, 193, 194, 195 zu den Bauteilmodell-Datensätzen der Spanten 137, 138 auf. Die Generierung des Bauteilmodell-Datensatzes der als neu einzufügende Querstrebe 151 konzipierten Adapterbauteils 191 kann händisch durch einen Techniker, aber auch automatisiert durch einen Regelsatz erfolgen. Dieser kann einen Algorithmus enthalten, der geometrische Daten von Konturen des Dreidimensionaler-Tragwerkmodell-Datensatzes 112 des bestehenden Tragwerkes 2, die nahe den ausgewählten Schnittstellenmerkmalen 192, 193, 194, 195 des Adapterbauteils 191 angeordnet sind, selektiert, und die auf die ausgewählten Schnittstellenmerkmale 192, 193, 194, 195 einwirkenden, maximalen Kräfte F1, F2, F3, F4 und Momente P1, P2 ermittelt. Hierbei wird vorzugsweise ein Maximalansatz gewählt, das heißt, dass die aus dem Digitaler-Doppelgänger-Datensatz 131 abrufbaren, bei den einzelnen Bauteilmodell-Datensätzen 134, ..., NN als charakterisierende Eigenschaften hinterlegten, maximal zu erwartenden Kräfte F1, F2, F3, F4 und Momente P1, P2 als Berechnungsgrundlage herangezogen werden.

Um zu einem funktionsgetriebenen Design des Adapterbauteils 191 zu gelangen, kann mittels der selektierten, geometrischen Daten, den geometrischen Daten der Bauteilmodell-Datensätze 112, 137, 138, welche die ausgewählten Schnittstellenmerkmale aufweisen, sowie mit den auf diese Schnittstellenmerkmale wirkenden Kräften, der Bauteilmodell-Datensatz des Adapterbauteils 191 generiert werden. Im vorliegenden Ausführungsbeispiel sind es die Schnittstellenmerkmale 192, 193, 194, 195 zu den Spanten137, 138 sowie die auf diese Schnittstellenmerkmale 192, 193, 194, 195 wirkenden Kräfte F1, F2, F3, F4 und Momente P1, P2. Hierbei geben die selektierten, geometrischen Daten der miteinander zu verbindenden Bauteilmodell-Datensätze der Spanten 137, 138, und des Dreidimensionaler-Tragwerkmodell-Datensatzes 112 bestimmte Ausdehnungsgrenzen des zu generierenden Adapterbauteils 191 vor. Die Generierung des Bauteilmodell-Datensatzes des Adapterbauteils 191 erfolgt vorzugsweise unter Berücksichtigung von auszuwählenden Optimierungskriterien mittels eines Optimierungsalgorithmus. Dieser kann beispielsweise Vorgaben beinhalten, dass das Adapterbauteil 119 auch weitere Funktionen wie das gegenseitigen Abstützen der Seitenstrukturen 153, 154 erfüllen muss und/oder auf Basis der bekannten Monte-Carlo-Simulation eine möglichst materialsparende Gestalt aufweisen sollte. Im vorliegenden Ausführungsbeispiel ist der generierte Bauteilmodell-Datensatz des Adapterbauteils 191 eine neue Querstrebe 151, die die Bauteilmodell-Datensätze der Spanten 137, 138 mit dem Dreidimensionaler-Tragwerkmodell-Datensatz 112 verbindet. Wie deutlich erkennbar ist, ist aufgrund des angewendeten Optimierungsalgorithmus und den auf die Schnittstellenmerkmale 192, 193, 194, 195 errechneten Kräfte F1, F2, F3, F4 und Momente P1, P2 die neue, physische Querstrebe 151 deutlich schlanker ausgefallen, als die als zu entfernend markierte Querstrebe 39.

Figur 4 zeigt eine mögliche Erfassung von Bildaufnahmen zur Generierung des in den Figuren 1 bis 3 dargestellten Dreidimensionaler-Tragwerkmodell-Datensatzes 112. Dargestellt ist eine Seitenansicht der bestehenden, zu modernisierenden Personentransportanlage 1, mithilfe derer Personen beispielsweise zwischen zwei Niveaus E1, E2 befördert werden können.

Das bestehende Tragwerk 2 ist das zentrale Bauteil der Personentransportanlage 1 und nimmt die übrigen Komponenten der Personentransportanlage 1 auf, um diese über Auflagestellen 4 innerhalb eines Gebäudes 18 zu fixieren und ihr Gewicht auf das Gebäude 18 zu übertragen. Das bestehende Tragwerk 2 und dessen in der Figur 2 dargestellten Strukturkomponenten ist in der Figur 1 lediglich bezüglich seiner Positionen mit gestrichelten Pfeilen angedeutet, aber im Detail weggelassen, um eine Übersichtlichkeit der Figur 1 nicht zu beeinträchtigen.

Die zu modernisierende, bestehende Personentransportanlage 1 weist zwei ringförmig geschlossene Förderketten 3 auf. Die beiden Förderketten 3 sind aus einer Vielzahl von Kettengliedern zusammengesetzt. Die beiden Förderketten 3 können entlang eines Verfahrwegs 5 in Verfahrrichtungen verlagert werden. Die Förderketten 3 verlaufen über weite Bereiche hin parallel zueinander und sind dabei in einer Richtung quer zu der Verfahrrichtung voneinander beabstandet. In Zutrittsbereichen Z1, Z2 angrenzend an die Ebenen de E1, E2 des Bauwerkes 18 werden die Förderketten 3 durch Umlenkräder 15, 17 umgelenkt.

Zwischen den beiden Förderketten 3 erstrecken sich mehrere Tritteinheiten 7 in Form von Trittstufen. Jede Tritteinheit 7 ist dabei nahe ihren seitlichen Enden an jeweils einer der Förderketten 3 befestigt und kann somit mithilfe der Förderketten 3 in den Verfahrrichtungen entlang des Verfahrwegs 5 verfahren werden. Die an den Förderketten 3 geführten Tritteinheiten 7 bilden dabei ein Transportband 9, bei dem die Tritteinheiten 7 entlang des Verfahrwegs 5 hintereinander angeordnet sind und zumindest in einem Förderbereich 19 von Passagieren betreten werden können. Um die Förderketten 3 verlagern zu können, verfügt die Personentransportanlage 1 über eine Antriebsmaschine 16 und eine diese steuernde Steuerung 12 (welche in Figur 4 lediglich sehr schematisch angedeutet sind). Das Transportband 9 bildet zusammen mit der Antriebsmaschine 16 und den Umlenkrädern 15, 17 eine Fördereinrichtung 13, deren Tritteinheiten 9 relativ zu der in dem Gebäude 18 stationär fest verankerten, bestehenden Tragwerk 2 verlagert werden können.

Die Personentransportanlage 1 verfügt ferner über zwei Balustraden 6 (nur eine sichtbar) und and diesen angeordnete Handläufe 8, wobei die letztgenannten im Allgemeinen zusammen mit den Förderketten 3 angetrieben werden und sich somit synchron mit dem Transportband 9 bewegen.

Nach einer gewissen Betriebsdauer kann eine bestehende Personentransportanlage 1 modernisiert werden, um diese auf den neusten technischen Stand zu bringen. Hierbei müssen die verbleibenden Komponenten des bestehenden Tragwerkes 2 präzise vermessen werden, beispielsweise mit dem hierin beschriebenen Verfahren unter Verwendung einer Erfassungsvorrichtung 21. Die Erfassungsvorrichtung 21 ist dabei dazu ausgebildet, ein Dreidimensionaler-Tragwerkmodell-Datensatz 112 des bestehenden Tragwerkes 2 zu erzeugen, welches dann wie in den Figuren 1 bis 3 dargestellt, genutzt werden kann.

Die in der Figur 4 schematisch dargestellte Erfassungsvorrichtung 21 verfügt über eine Bildaufnahmeeinrichtung 22. Die Bildaufnahmeeinrichtung 22 ist mithilfe einer Fixiereinrichtung 24 an der Fördereinrichtung 13 fixiert. Ferner ist die Erfassungsvorrichtung 21 mit einer Recheneinrichtung 23 ausgestattet.

Im Rahmen eines Modernisierungsvorgangs kann Personal eine oder wenige der Tritteinheiten 7 an der zu modernisierenden Personentransportanlage 1 vorab entfernen. Hierzu benötigt das Personal im Allgemeinen keine speziellen Fachkenntnisse, sodass diese Tätigkeit auch beispielsweise von Hilfspersonal durchgeführt werden kann. Gegebenenfalls können auch andere Abdeckungen wie beispielsweise Verschalungsbleche eines Balustradensockels 14 entfernt werden. Durch die Entfernung einer Tritteinheit 7 wird eine Öffnung in dem Transportband 9 freigelegt und damit ein visueller Zugang 25 auf Teile des darunterliegenden Tragwerkes 2 freigegeben.

Anschließend wird die Bildaufnahmeeinrichtung 22 an der Fördereinrichtung 13 mithilfe ihrer Fixiereinrichtung 24 fixiert. Anfangs kann die Bildaufnahmeeinrichtung 22 beispielsweise nahe einem Ende des Förderbereichs 19, beispielsweise in der Nähe des Zutrittsbereiches Z1 auf der unteren Ebene E1, angeordnet werden.

Im dargestellten Beispiel ist die Fixiereinrichtung 24 in Form eines Fußes ausgebildet, der einerseits dazu ausgestaltet ist, die Bildaufnahmeeinrichtung 22 zu tragen, und der andererseits dazu ausgestaltet ist, an einer der Tritteinheiten 7 befestigt zu werden. Die Fixiereinrichtung 24 kann dabei beispielsweise in Nuten innerhalb der Tritteinheit 7 eingreifen.

Alternativ könnte die Fixiereinrichtung 24 auch dazu ausgebildet sein, statt mit einer der Tritteinheiten 7 mit anderen Komponenten des Transportbandes 9, beispielsweise einer Förderkette 3 oder daran ansetzenden Achsen, zusammen zu wirken. Auch der Anbau an die umlaufend angeordneten Handläufe 8 beziehungsweise an die Handlaufriemen ist möglich.

Sobald der visuelle Zugang 25 durch Entfernen von Tritteinheiten 7 geschaffen und die Bildaufnahmeeinrichtung 22 an der Fördereinrichtung 13 befestigt ist, kann die Bildaufnahmeeinrichtung 22 sukzessive entlang des Verfahrwegs 5 innerhalb des Förderbereichs 19 verlagert werden. Dabei kann ein Blickbereich der Bildaufnahmeeinrichtung 22 durch den visuellen Zugang 25 hindurch auf darunterliegende Strukturkomponenten des bestehenden Tragwerkes 2 gerichtet sein und Bildaufnahmen von diesen aufnehmen.

Die Bildaufnahmeeinrichtung 22 kann vorzugsweise dazu ausgestaltet sein, dreidimensionale Bilder des bestehenden Tagwerkes 2 innerhalb ihres Blickbereichs aufzunehmen. Hierzu kann die Bildaufnahmeeinrichtung 22 beispielsweise als 3D- Laserscanner oder als TOF-Kamera ausgebildet sein.

Um möglichst Bildaufnahmen entlang des gesamten Tragwerkes 2 aufnehmen zu können, kann die an der Fördereinrichtung 13 fixierte Bildaufnahmeeinrichtung 22 zusammen mit dem Transportband 9 sukzessive entlang des Verfahrwegs 5 innerhalb des Förderbereichs 19 verfahren werden und dabei von verschiedenen Positionen aus mehrere Bildaufnahmen aufnehmen.

Zu den Bildaufnahmen gehörende Daten beziehungsweise Signale können dann an die Recheneinrichtung 23 übertragen werden. Die Recheneinrichtung 23 kann dabei direkt an der Bildaufnahmeeinrichtung 22 vorgesehen sein oder sogar in diese integriert sein. In diesem Fall kann der in der Figur 2 dargestellte Dreidimensionaler-Doppelgänger-Datensatz 112 direkt in der mit der Recheneinrichtung 23 ausgestatteten Bildaufnahmeeinrichtung 22 erzeugt werden. Nachfolgend kann der Dreidimensionaler-Doppelgänger-Datensatz 112 gegebenenfalls an ein Kontrollzentrum oder eine Datenwolke 50 (siehe Figur 1) zur weiteren Bearbeitung übermittelt werden.

Alternativ kann die Recheneinrichtung 23, wie in Figur 4 beispielhaft dargestellt, als separate Einheit bereitgestellt sein. Eine solche separate Recheneinrichtung 23 kann beispielsweise in der Nähe der bestehenden Personentransportanlage 1 angeordnet sein und mit der Bildaufnahmeeinrichtung 22 beispielsweise über eine drahtlose Datenverbindung kommunizieren. Alternativ kann die Recheneinrichtung 23 auch weiter entfernt angeordnet sein, beispielsweise in einem Kontrollzentrum, welches sich außerhalb des Bauwerkes 18 oder sogar in einer anderen Stadt befindet. In diesem Fall können Daten und Signale der Bildaufnahmeeinrichtung 22 beispielsweise über ein verdrahtetes oder drahtloses Netzwerk an die Recheneinrichtung 23 übertragen werden.

Aus den von der Bildaufnahmeeinrichtung 22 erhaltenen Daten der Bildaufnahmen kann innerhalb der Recheneinrichtung 23 ein Dreidimensionaler-Tragwerkmodell-Datensatz 112 der von der Bildaufnahmeeinrichtung 22 aufgenommenen Struktur des bestehenden Tragwerkes 2 generiert werden. Mit diesem Dreidimensionaler-Tragwerkmodell-Datensatz 112 sind alle Abmessungen des bestehenden Tragwerkes 2 beziehungsweise dessen Flächen und Kanten sowie deren Lage und Orientierung relativ zueinander erfasst und verfügbar.

Um das Aufnehmen der Bildaufnahmen sowie das Generieren des Dreidimensionaler-Tragwerkmodell-Datensatzes 112 basierend auf mehreren aufgenommenen Bildaufnahmen vereinfachen oder präzisieren zu können, können vor dem Aufnahmevorgang entlang des Verfahrwegs 5 in dem Förderbereich 19 vorzugsweise mehrere eindeutig erkennbare Referenzmarken 10 angeordnet werden. Die Referenzmarken 10 können beispielsweise als Aufkleber mit einem eindeutig zuzuordnenden Code, beispielsweise einem Barcode oder QR-Code, vorgesehen sein.

Die Referenzmarken 10 können dabei derart angeordnet werden, dass sie innerhalb des Blickfelds der Bildaufnahmeeinrichtung 22 sind, zumindest wenn diese an bestimmten Aufnahmepositionen angeordnet ist. Die Aufnahmepositionen können dabei derart gewählt sein, dass in jeder Bildaufnahme mindestens eine Referenzmarke 10, vorzugsweise wenigstens zwei Referenzmarken 10 mit aufgenommen werden.

Aufgrund der mitaufgenommenen Referenzmarken 10 kann nachfolgend ein Gesamtbild beziehungsweise der Dreidimensionaler-Tragwerkmodell-Datensatz 112 aus den einzelnen Bildaufnahmen einfacher generiert werden und/oder dieses kalibriert werden und/oder etwaige beispielsweise durch Aufnahmefehler bedingte Verzerrungen herausgerechnet werden.

Gegebenenfalls kann die Bildaufnahmeeinrichtung 22 ferner dazu ausgestaltet sein, mithilfe einer Signalaustauscheinrichtung 11 mit der Steuerung 12 der Personentransportanlage 1 zu kommunizieren. Beispielsweise kann die Steuerung 12 immer dann dazu veranlasst werden, die Antriebsmaschine 16 zu stoppen, wenn die Bildaufnahmeeinrichtung 22 bestimmte Positionen erreicht hat, so dass die Bildaufnahmeeinrichtung 22 an diesen Positionen bei stillstehendem Transportband 9 ohne Verwacklungen Bildaufnahmen aufnehmen kann. Ferner kann die Bildaufnahmeeinrichtung 22 die Steuerung 12 dazu veranlassen, den Betrieb der Antriebsmaschine 16 zu stoppen, sobald die Bildaufnahmeeinrichtung 22 den Förderbereich 19 vollständig durchfahren hat und sich beispielsweise dessen gegenüberliegendem Ende nähert.

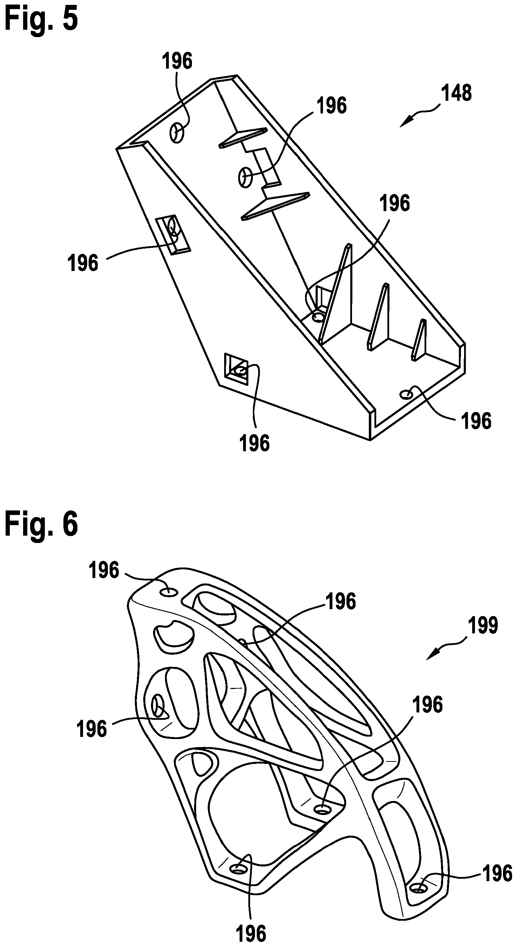

Die Figur 5 zeigt in dreidimensionaler Ansicht einen Bauteilmodell-Datensatz eines Adapterbauteils 148, wie es zum Beispiel händisch mittels eines herkömmlichen CAD-Programms aufgrund der ermittelten Einbaubedingungen konstruiert würde. Dieses dient beispielsweise zum Verbinden des in der Figur 2 dargestellten Dreidimensionaler-Tragwerkmodell-Datensatzes 112 mit einem nicht näher dargestellten, neu einzufügenden Bauteilmodell-Datensatz eines Antriebsmaschinenträgers der modernisierten Personentransportanlage 171. Am Bauteilmodell-Datensatz des Adapterbauteils 148 sind als Schnittstellenmerkmale 196 Schraubenlöcher definiert, so dass mittels dessen physischen Bauteils hernach der physische Maschinenträger mit dem bestehenden Tragwerk 2 verbunden werden kann.

Die Figur 6 zeigt in dreidimensionaler Ansicht einen Bauteilmodell-Datensatz eines Adapterbauteils 199 mit denselben Schnittstellenmerkmalen 196, wie der Bauteilmodell-Datensatz des Adapterbauteils 148 der Figur 5, jedoch mit einem generativen funktionsgetriebenen Design.

Mit anderen Worten können die Bauteilmodell-Datensätze von Adapterbauteilen 199 dadurch individuell aufgrund ihrer Funktion, ihren Einbaubedingungen sowie auf diese einwirkenden Kräfte und Belastungen für die jeweilige, hernach modernisierte Personentransportanlage 171 Topologie- optimiert konfiguriert und in weiterer Folge auch produziert werden. Daraus ergeben sich beträchtliche Vorteile für den Ressourcenverbrauch, da nur die unbedingt notwendige Menge an Material verbraucht wird (z.B. Stahl, Aluminium) bzw. neuartige, ressourcensparende Produktionstechniken eingesetzt werden können, wodurch der CO²-Footprint der modernisierten Personentransportanlage 171 noch weiter sinkt, da durch die Beibehaltung des bestehenden Tragwerkes 2 und durch ressourcenschonende Anpassung mit Adapterbauteilen 199 weniger Material aufwändig recycelt werden muss.

Da der Erfolg einer Modernisierung einer bestehenden Personentransportanlage 1 auch immer eine zeitkritische Komponente beinhaltet, kann mindestens ein Bauteilmodell-Datensatz eines Adapterbauteils 199 mit entsprechenden produktionsspezifischen Daten versehen, an eine 3D-Druckmaschine übertragen und mittels dieses Bauteilmodell-Datensatzes 199 ein physisches Adapterbauteil erzeugt werden. Hierdurch können diese sehr speziellen Einzelstücke ressourcenschonend produziert werden und sind gewissermaßen «über Nacht» verfügbar.

Obwohl die vorliegende Erfindung in den Figuren 1 bis 6 am Beispiel einer als Fahrtreppe ausgestalteten Personentransportanlage 1 ausführlich beschrieben wurde, ist es offensichtlich, dass die beschriebenen Verfahrensschritte und eine entsprechende Vorrichtung gleichermaßen auch für Fahrsteige Anwendung finden. Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Modernisierungsverfahren (100) einer bestehenden Personentransportanlage (1), die als Fahrtreppe oder Fahrsteig ausgestaltet ist und die ein umlaufendes Transportband (9) aufweist, **gekennzeichnet durch** die Schritte:
● dass vom bestehenden Tragwerk (2) der bestehenden Personentransportanlage (1) ein Dreidimensionaler-Tragwerkmodell-Datensatz (112) erzeugt wird;
● dass ausgehend vom Dreidimensionaler-Tragwerkmodell-Datensatz (112) des bestehenden Tragwerkes (2) dessen Kernraum (113) ermittelt wird;
● dass kundenspezifische Konfigurierungsdaten (123) betreffend die neu zu verbauenden Bauteile ermittelt werden, wobei nur Konfigurierungen ermöglicht werden, deren Transportband (9) innerhalb des Kernraums (113) angeordnet werden kann;
● dass mittels der kundenspezifischen Konfigurierungsdaten (123) aus Bauteilmodell-Datensätzen (134, ..., NN) ein Digitaler-Doppelgänger-Datensatz (131) einer kompletten Personentransportanlage inklusive eines provisorischen Tragwerkmodell-Datensatzes (134) erstellt wird;
● dass in den Kernraum (113) hineinragende oder diesen durchdringende Konturen des Dreidimensionaler-Tragwerkmodell-Datensatzes (112) des bestehenden Tragwerkes (2) als zu entfernen markiert werden, und
● dass der Dreidimensionaler-Tragwerkmodell-Datensatz (112) des bestehenden Tragwerkes (2) mit dem provisorischen Tragwerkmodell-Datensatz (134) des digitalen Doppelgänger-Datensatzes (131) abgeglichen wird, indem Bauteilmodell-Datensätze von Adapterbauteilen (148, 191, 199) unter Berücksichtigung von Schnittstellenmerkmalen (192, 193, 194, 195, 196) des provisorischen Tragwerkmodell-Datensatzes (134), den geometrischen Daten des Dreidimensionaler-Tragwerkmodell-Datensatzes (112) des bestehenden Tragwerkes (2) und unter Nichtbeachtung von dessen markierten Konturen erzeugt werden.

2. Modernisierungsverfahren (100) nach Anspruch 1, wobei das bestehende Tragwerk (2) beziehungsweise dessen Dreidimensionaler-Tragwerkmodell-Datensatz (112) zwei Seitenstrukturen (153, 154) aufweist, die mittels einer Bodenstruktur (155) miteinander verbunden sind und dadurch bezüglich seiner Längserstreckung einen U-förmigen Querschnitt aufweist, wobei der Kernraum (113) durch die Innenseiten der Seitenstrukturen (153, 154) und der Bodenstruktur (155) begrenzt ist.

3. Modernisierungsverfahren (100) nach Anspruch 1 oder 2, wobei der Dreidimensionaler-Tragwerkmodell-Datensatz (112) des bestehenden Tragwerkes (2) dadurch erzeugt wird:
● dass eine Bildaufnahmeeinrichtung (22) am bestehenden, umlaufenden Transportband (9) fixiert wird;
● dass zumindest eine Tritteinheit (7) des umlaufenden Transportbandes (9) entfernt wird, um einen visuellen Zugang (25) zu darunterliegenden Bereichen des bestehenden Tragwerkes (2) zu eröffnen;
● dass vor dem Aufnehmen von Bildaufnahmen, ortsfest an der bestehenden Personentransportanlage (1), an mindestens einer Stelle innerhalb des Verfahrwegs (5) mindestens eine Referenzmarke (10) angebracht wird die für die Bildaufnahmeeinrichtung (22) eindeutig erkennbar ist;
● dass das Transportband (9) zusammen mit der daran fixierten Bildaufnahmeeinrichtung (22) zumindest über Teilbereiche des Verfahrwegs (5) umlaufend verlagert wird;
● dass Bildaufnahmen der zu vermessenden Strukturkomponenten des bestehenden Tragwerkes (2) mittels der Bildaufnahmeeinrichtung (22) von mehreren Positionen entlang des Verfahrwegs (5) aus aufgenommen werden; und
● dass das Erzeugen des Dreidimensionaler-Tragwerkmodell-Datensatzes (112) zumindest von Teilbereichen der Strukturkomponenten des bestehenden Tragwerkes (2), basierend auf den aufgenommenen Bildaufnahmen und unter Zuhilfenahme der mindestens einen, mitaufgenommenen Referenzmarke (10), erfolgt.

4. Modernisierungsverfahren (100) nach Anspruch 3, wobei beim Erzeugen des Dreidimensionaler-Tragwerkmodell-Datensatzes (112) mehrere Bildaufnahmen unter Berücksichtigung von in den Bildaufnahmen mitaufgenommenen Referenzmarken (10) zu einer Gesamtaufnahme zusammengesetzt werden.

5. Modernisierungsverfahren (100) nach Anspruch 3 oder 4, wobei beim Erzeugen des Dreidimensionaler-Tragwerkmodell-Datensatzes (112) Verzerrungen in den Bildaufnahmen anhand von in den Bildaufnahmen mitaufgenommenen Referenzmarken (10) korrigiert werden.

6. Modernisierungsverfahren (100) nach einem der vorangehenden Ansprüche 3 bis 5, wobei der erzeugte Dreidimensionaler-Tragwerkmodell-Datensatz (112) anhand von in den Bildaufnahmen mitaufgenommenen Referenzmarken (10) kalibriert wird.

7. Modernisierungsverfahren (100) nach einem der vorangehenden Ansprüche 3 bis 6, wobei die Bildaufnahmen während des kontinuierlichen Verlagerns des bestehenden Transportbandes (9) aufgenommen werden.

8. Modernisierungsverfahren (100) nach einem der vorangehenden Ansprüche, wobei beim Digitaler-Doppelgänger-Datensatz (131) der aus den kundenspezifischen Konfigurierungsdaten (123) generierte provisorische Tragwerkmodell-Datensatz (134) entfernt wird und der Dreidimensionaler-Tragwerkmodell-Datensatz (112) des bestehenden Tragwerkes (2) sowie die Bauteilmodell-Datensätze der Adapterbauteile (148, 191, 199) eingefügt werden.

9. Modernisierungsverfahren (100) nach Anspruch 8, wobei zur Generierung der Bauteilmodell-Datensätze von Adapterbauteilen (148, 191, 199) ein Regelsatz vorhanden ist, mittels welchen Regelsatzes:
● für jeden Bauteilmodell-Datensatz eines Adapterbauteils (191) eine logische Auswahl und Gruppierung von Schnittstellenmerkmalen (192, 193, 194, 195) der einzufügenden Bauteilmodell-Datensätze (137, 138) des Digitaler-Doppelgänger Datensatzes (131) getroffen wird;
● geometrische Daten von Konturen des Dreidimensionaler-Tragwerkmodell-Datensatzes (112) des bestehenden Tragwerkes (2), die nahe den ausgewählten Schnittstellenmerkmalen (192, 193, 194, 195) des Adapterbauteils (137, 138) angeordnet sind, selektiert werden; und
● die auf die ausgewählten Schnittstellenmerkmale (192, 193, 194, 195) einwirkenden, maximalen Kräfte (F1, F2, F3, F4) ermittelt werden.

10. Modernisierungsverfahren (100) nach Anspruch 9, wobei mittels der selektierten, geometrischen Daten des Dreidimensionaler-Tragwerkmodell-Datensatzes (112), den geometrischen Daten der Bauteilmodell-Datensätze (137, 138), welche die ausgewählten Schnittstellenmerkmale (192, 193, 194, 195) aufweisen, sowie mittels den auf diese Schnittstellenmerkmale wirkenden Kräften der Bauteilmodell-Datensatz des Adapterbauteils (191) generiert wird, wobei die Generierung unter Berücksichtigung von auszuwählenden Optimierungskriterien mittels eines Optimierungsalgorithmus erfolgt.

11. Modernisierungsverfahren (100) nach Anspruch 10, wobei mindestens ein Bauteilmodell-Datensatz eines Adapterbauteils (199) an eine 3D-Druckmaschine übertragen und mittels dieses Bauteilmodell-Datensatzes (199) ein physisches Adapterbauteil erzeugt wird.

12. Modernisierungsverfahren (100) nach einem der vorangehenden Ansprüche, wobei ein Kommissionierungs-Digitaler-Doppelgänger-Datensatz (145) aus dem Digitaler-Doppelgänger-Datensatz (131) erstellt wird, indem der Digitaler-Doppelgänger-Datensatz (131) mit produktionsspezifischen Daten (146) ergänzt wird und dieser Kommissionierungs-Digitaler-Doppelgänger-Datensatz (145) Soll-Daten umfasst, welche charakterisierende Merkmale von Bauteilen der hernach modernisierten Personentransportanlage (171) in einer Soll-Konfiguration wiedergeben.

13. Modernisierungsverfahren (100) nach Anspruch 12, ferner umfassend ein Erstellen eines Aktualisierter-Digitaler-Doppelgänger-Datensatzes ADDD (172);
wobei das Erstellen des ADDD (172) umfasst:
● Erstellen eines Fertigstellungs-Digitaler-Doppelgänger-Datensatzes basierend auf dem Kommissionierungs-Digitaler-Doppelgänger-Datensatz (145) durch Messen von Ist-Daten, welche charakterisierende Merkmale von Bauteilen der modernisierten, physischen Personentransportanlage (171) direkt nach deren Zusammenbau wiedergeben und Ersetzen von Soll-Daten in dem Kommissionierungs-Digitaler-Doppelgänger-Datensatz (145) durch entsprechende Ist-Daten; und
● Erstellen des ADDD (172) basierend auf dem Fertigstellungs-Digitaler-Doppelgänger-Datensatz durch Modifizieren des Fertigstellungs-Digitaler-Doppelgänger-Datensatzes während des Betriebs der modernisierten Personentransportanlage (171) unter Berücksichtigung von Messwerten, welche Änderungen von charakterisierenden Merkmale von Bauteilen der modernisierten Personentransportanlage (171) während deren Betriebs wiedergeben.

## Claims

1. Modernization method (100) of an existing passenger transport system (1) which is configured as an escalator or a moving walkway and which has a circulating conveyor belt (9), **characterized by** the steps that:
● from the existing supporting framework (2) of the existing passenger transport system (1), a three-dimensional supporting framework model data set (112) is generated;
● on the basis of the three-dimensional supporting framework model data set (112) of the existing supporting framework (2), its core space (113) is determined;
● customer-specific configuration data (123) relating to the new components to be installed are determined, wherein only configurations are possible whose conveyor belt (9) can be arranged within the core space (113);
● by means of the customer-specific configuration data (123) from component model data sets (134, ..., NN), a digital double data set (131) of a complete passenger transport system including a provisional supporting framework model data set (134) is created;
● contours of the three-dimensional supporting framework model data set (112) of the existing supporting framework (2) protruding or penetrating into the core space (113) are marked as to be removed, and
● the three-dimensional supporting framework model data set (112) of the existing supporting framework (2) is adapted in regard of the provisional supporting framework model data set (134) of the digital double data set (131) by component model data sets of adapter components (148, 191, 199) taking into consideration the interface features (192, 193, 194, 195, 196) of the provisional supporting framework model data set (134), and the geometric data of the three-dimensional supporting framework model data set (112) of the existing supporting framework (2) while disregarding its marked contours.

2. Modernization method (100) according to claim 1, wherein the existing supporting framework (2) or its three-dimensional supporting framework model data set (112) has two side structures (153, 154) which are connected to one another by means of a bottom structure (155) and thereby, with regard to its longitudinal extent, has a U-shaped cross section, wherein the core space (113) is delimited by the insides of the side structures (153, 154) and the bottom structure (155).

3. Modernization method (100) according to either claim 1 or claim 2, wherein the three-dimensional supporting framework model data set (112) of the existing structural framework (2) is generated in that:
● an image recording device (22) is fixed to the existing, circulating conveyor belt (9);
● at least one step unit (7) of the circulating conveyor belt (9) is removed in order to open up visual access (25) to the underlying regions of the existing supporting framework (2);
● before recording image recordings, at least one reference mark (10) which is clearly recognizable for the image recording device (22) is attached to the existing passenger transport system (1) in a stationary manner at at least one point within the travel path (5);
● the conveyor belt (9) together with the image recording device (22) fixed thereon is displaced circumferentially at least over sub-regions of the travel path (5);
● image recordings of the structural components of the existing supporting framework (2) to be measured are recorded by means of the image recording device (22) from a plurality of positions along the travel path (5); and
● the generation of the three-dimensional supporting framework model data set (112) takes place at least from sub-regions of the structural components of the existing supporting framework (2), based on the recorded image recordings and with the aid of the at least one reference mark (10) recorded together.

4. Modernization method (100) according to claim 3, wherein, when generating the three-dimensional supporting framework model data set (112), a plurality of image recordings are combined to form an overall recording, taking into consideration reference marks (10) recorded together in the image recordings.

5. Modernization method (100) according to either claim 3 or claim 4, wherein, when generating the three-dimensional supporting framework model data set (112), distortions in the image recordings are corrected on the basis of reference marks (10) recorded together in the image recordings.

6. Modernization method (100) according to any of the preceding claims 3 to 5, wherein the generated three-dimensional supporting framework model data set (112) is calibrated on the basis of reference marks (10) recorded together in the image recordings.

7. Modernization method (100) according to any of the preceding claims 3 to 6, wherein the image recordings are recorded during the continuous displacement of the existing conveyor belt (9).

8. Modernization method (100) according to any of the preceding claims, wherein, the provisional supporting framework model data set (134) generated from the customer-specific configuration data (123) is removed in the digital double data set (131), and the three-dimensional supporting framework model data set (112) of the existing supporting framework (2) and the component model data sets of the adapter components (148, 191, 199) are inserted.

9. Modernization method (100) according to claim 8, wherein a set of rules is available for generating the component model data sets of adapter components (148, 191, 199), by means of which set of rules:
• for each component model data set of an adapter component (191), a logical selection and grouping of interface features (192, 193, 194, 195) of the component model data sets (137, 138) of the digital double data set (131) to be inserted is made;
• geometric data of contours of the three-dimensional supporting framework model data set (112) of the existing structural framework (2), which are arranged near the selected interface features (192, 193, 194, 195) of the adapter component (137, 138), are selected; and
• the maximum forces (F1, F2, F3, F4) acting on the selected interface features (192, 193, 194, 195) are determined.

10. Modernization method (100) according to claim 9, wherein by means of the selected geometric data of the three-dimensional supporting framework model data set (112), the geometric data of the component model data sets (137, 138) having the selected interface features (192, 193, 194, 195), and by means of the forces acting on these interface features, the component model data set of the adapter component (191) is generated by means of the forces acting on these interface features, wherein the generation takes into consideration optimization criteria to be selected using an optimization algorithm.

11. Modernization method (100) according to claim 10, wherein at least one component model data set of an adapter component (199) is transmitted to a 3D printing machine and a physical adapter component is generated by means of this component model data set (199).

12. Modernization method (100) according to any of the preceding claims, wherein a commissioning digital double data set (145) is created from the digital double data set (131) in that the digital double data set (131) is supplemented with production-specific data (146) and this commissioning digital double data set (145) comprises target data which reproduce characterizing features of components of the subsequently modernized passenger transport system (171) in a target configuration.

13. Modernization method (100) according to claim 12, further comprising creating an updated digital double data set ADDD (172);
wherein creating the updated digital double data set (172) comprises:
• creating a production digital double data set based on the commissioning digital double data set (145) by measuring actual data which reproduce characterizing features of components of the modernized physical passenger transport system (171) immediately after the assembly, and replacing target data in the commissioning digital double data set (145) with corresponding actual data; and,
• creating the updated digital double data set (172) based on the production digital double data set by modifying the production digital double data set during the operation of the passenger transport system (171) taking into consideration measured values, which reproduce changes in the characterizing features of components of the modernized passenger transport system (171) during operation.

## Revendications

1. Procédé de modernisation (100) d'une installation de transport de personnes (1) existante, laquelle est conçue comme un escalier roulant ou un trottoir roulant et présente une bande transporteuse (9) circonférentielle, **caractérisé par** les étapes suivantes :
• qu'un jeu de données de modèle de structure porteuse tridimensionnel (112) est généré à partir de la structure porteuse existante (2) de l'installation de transport de personnes (1) existante ;
• que l'espace central (113) de la structure porteuse existante (2) est déterminé à partir du jeu de données de modèle de structure porteuse tridimensionnel (112) de celle-ci ;
• que des données de configuration spécifiques au client (123) concernant les nouvelles pièces à monter sont déterminées, seules des configurations avec lesquelles la bande transporteuse (9) peut être disposée à l'intérieur de l'espace central (113) étant permises ;
• qu'un jeu de données de double numérique (131) d'une installation de transport de personnes complète comportant un jeu de données de modèle de structure porteuse provisoire (134) est généré au moyen des données de configuration spécifiques au client (123) à partir de jeux de données de modèles de pièces (134, ..., NN) ;
• que des contours du jeu de données de modèle de structure porteuse tridimensionnel (112) de la structure porteuse existante (2) qui pénètrent dans l'espace central (113) ou traversent celui-ci sont marqués comme étant à supprimer, et
• que le jeu de données de modèle de structure porteuse tridimensionnel (112) de la structure porteuse existante (2) est comparé au jeu de données de modèle de structure porteuse provisoire (134) du jeu de données de double numérique (131) en générant des jeux de données de modèles de pièces de pièces d'adaptation (148, 191, 199) en tenant compte de propriétés d'interfaces (192, 193, 194, 195, 196) du jeu de données de modèle de structure porteuse provisoire (134), des données géométriques du jeu de données de modèle de structure porteuse tridimensionnel (112) de la structure porteuse existante (2) et en ignorant les contours marqués de celle-ci.

2. Procédé de modernisation (100) selon la revendication 1, dans lequel la structure porteuse existante (2) ou son jeu de données de modèle de structure porteuse tridimensionnel (112) présente deux structures latérales (153, 154) reliées l'une à l'autre au moyen d'une structure de plancher (155) et présente ainsi une section transversale en forme de U par rapport à son étendue longitudinale, l'espace central (113) étant délimité par les faces intérieures des structures latérales (153, 154) et de la structure de plancher (155).

3. Procédé de modernisation (100) selon la revendication 1 ou 2, dans lequel le jeu de données de modèle de structure porteuse tridimensionnel (112) de la structure porteuse existante (2) est généré par le fait :
• qu'un dispositif de prise de vue (22) est fixé sur la bande transporteuse (9) circonférentielle existante ;
• qu'au moins une unité de marche (7) de la bande transporteuse (9) circonférentielle est supprimée afin d'ouvrir un accès visuel (25) aux zones sous-jacentes de la structure porteuse existante (2) ;
• qu'avant la prise de prises de vue, au moins une marque de référence (10) clairement reconnaissable par le dispositif de prise de vue (22) est apposée de manière fixe sur l'installation de transport de personnes (1) existante à au moins un point à l'intérieur du trajet de déplacement (5) ;
• que la bande transporteuse (9) est déplacée de manière circonférentielle conjointement avec le dispositif de prise de vue (22) fixé sur celle-ci, au moins sur des zones partielles du trajet de déplacement (5) ;
• que des prises de vue des composants structurels à mesurer de la structure porteuse existante (2) sont prises au moyen du dispositif de prise de vue (22) depuis plusieurs positions le long du trajet de déplacement (5) ; et
• que la génération du jeu de données de modèle de structure porteuse tridimensionnel (112) au moins de zones partielles des composants structurels de la structure porteuse existante (2) est effectuée sur la base des prises de vue prises et à l'aide de l'au moins une marque de référence (10) incluse.

4. Procédé de modernisation (100) selon la revendication 3, dans lequel plusieurs prises de vue sont assemblées pour former une prise de vue globale lors de la génération du jeu de données de modèle de structure porteuse tridimensionnel (112) en tenant compte de marques de référence (10) incluses dans les prises de vue.

5. Procédé de modernisation (100) selon la revendication 3 ou 4, dans lequel des distorsions dans les prises de vue sont corrigées à l'aide de marques de référence (10) incluses dans les prises de vue lors de la génération du jeu de données de modèle de structure porteuse tridimensionnel (112).

6. Procédé de modernisation (100) selon l'une des revendications précédentes 3 à 5, dans lequel le jeu de données de modèle de structure porteuse tridimensionnel (112) généré est étalonné sur la base de marques de référence (10) incluses dans les prises de vue.

7. Procédé de modernisation (100) selon l'une des revendications précédentes 3 à 6, dans lequel les prises de vue sont prises pendant le déplacement continu de la bande transporteuse (9) existante.

8. Procédé de modernisation (100) selon l'une des revendications précédentes, dans lequel, dans le cas du jeu de données de double numérique (131), le jeu de données de modèle de structure porteuse provisoire (134) généré à partir des données de configuration spécifiques au client (123) est supprimé et le jeu de données de modèle de structure porteuse tridimensionnel (112) de la structure porteuse existante (2) ainsi que les jeux de données de modèles de pièces des pièces d'adaptation (148, 191, 199) sont insérés.

9. Procédé de modernisation (100) selon la revendication 8, dans lequel, pour la génération des jeux de données de modèles de pièces de pièces d'adaptation (148, 191, 199), un jeu de régulation est prévu, au moyen duquel jeu de régulation :
• une sélection logique et un regroupement de propriétés d'interfaces (192, 193, 194, 195) des jeux de données de modèles de pièces à insérer (137, 138) du jeu de données de double numérique (131) sont effectués pour chaque jeu de données de modèle de pièce d'une pièce d'adaptation (191) ;
• des données géométriques de contours du jeu de données de modèle de structure porteuse tridimensionnel (112) de la structure porteuse existante (2) disposés à proximité des propriétés d'interfaces (192, 193, 194, 195) sélectionnées de la pièce d'adaptation (137, 138) sont sélectionnées ; et
• les forces maximales (F1, F2, F3, F4) agissant sur les propriétés d'interfaces (192, 193, 194, 195) sélectionnées sont déterminées.

10. Procédé de modernisation (100) selon la revendication 9, dans lequel le jeu de données de modèle de pièce de la pièce d'adaptation (191) est généré au moyen des données géométriques sélectionnées du jeu de données de modèle de structure porteuse tridimensionnel (112), des données géométriques des jeux de données de modèles de pièces (137, 138) présentant les propriétés d'interfaces (192, 193, 194, 195) sélectionnées et au moyen des forces agissant sur lesdites propriétés d'interfaces, la génération étant effectuée au moyen d'un algorithme d'optimisation en tenant compte de critères d'optimisation à sélectionner.

11. Procédé de modernisation (100) selon la revendication 10, dans lequel au moins un jeu de données de modèle de pièce d'une pièce d'adaptation (199) est transmis à une machine d'impression 3D et une pièce d'adaptation physique est générée au moyen dudit jeu de données de modèle de pièce (199).

12. Procédé de modernisation (100) selon l'une des revendications précédentes, dans lequel un jeu de données de double numérique de mise en service (145) est créé à partir du jeu de données de double numérique (131) par le fait que le jeu de données de double numérique (131) est complété avec des données spécifiques à la production (146) et ledit jeu de données de double numérique de mise en service (145) comprend des données de consigne qui reproduisent des propriétés caractéristiques de pièces de l'installation de transport de personnes (171) ainsi modernisée dans une configuration de consigne.

13. Procédé de modernisation (100) selon la revendication 12, comprenant en outre la création d'un jeu de données de double numérique mis à jour ADDD (172) ; dans lequel la création de l'ADDD (172) comprend :
• la création d'un jeu de données de double numérique de finalisation sur la base du jeu de données de double numérique de mise en service (145) par la mesure de données réelles reproduisant des propriétés caractéristiques de pièces de l'installation de transport de personnes (171) physique modernisée immédiatement après son assemblage et le remplacement de données de consigne dans le jeu de données de double numérique de mise en service (145) par des données réelles correspondantes ; et
• la création de l'ADDD (172) sur la base du jeu de données de double numérique de finalisation par la modification du jeu de données de double numérique de finalisation pendant le fonctionnement de l'installation de transport de personnes (171) modernisée en tenant compte de valeurs de mesure qui reproduisent des modifications de propriétés caractéristiques de pièces de l'installation de transport de personnes (171) modernisée pendant son fonctionnement.
